# EUROPEAN PATENT SPECIFICATION

(11) **EP 0 947 357 B1**
(45) Date of publication and mention of the grant of the patent: **22.10.2003**
(21) Application number: 98302496.9
(22) Date of filing: 31.03.1998
(51) Int. Cl.: B60B 7/20

(54) **Wheel cover**
Radzierblende
Enjoliveur de roues

(43) Date of publication of application: 06.10.1999
(73) Proprietor: Okamoto, Yoshiaki, Akashi-shi, Hyogo-ken (JP); Okamoto, Hiromu, Akashi-shi, Hyogo-ken (JP); Fujiwara, Miki, Akashi-shi, Hyogo-ken (JP)
(72) Inventor: Okamoto, Yoshiaki, Akashi-shi, Hyogo-ken (JP); Okamoto, Hiromu, Akashi-shi, Hyogo-ken (JP); Fujiwara, Miki, Akashi-shi, Hyogo-ken (JP)
(74) Representative: Ablewhite, Alan James

(56) References cited:
- EP-A- 0 172 792
- DE-A- 4 101 726
- US-A- 3 219 391
- US-A- 5 190 354
- US-A- 5 588 715

## Description

### BACKGROUND TO THE INVENTION

The present invention relates to a wheel cover for a vehicle wheel comprising a wheel cover body, means for rotatably mounting said cover body on a wheel, and means for biasing the cover body to a determined angular position regardless of the angular position of the wheel about its axis.

A conventional wheel cover comprises a wheel cover body covering the disc part of the wheel and a plurality of fitting pieces attached to the wheel cover body, for removably fixing to the disc part or the rim of the wheel. Because the conventional wheel cover is fixed to the disc part or rim of the wheel with a plurality of fitments, people cannot see a design drawn on the wheel cover body because it rotates with the wheel, and therefore the design depicted thereon also rotates.

People can see the design depicted on the wheel cover when the vehicle is stationary. However, as the vehicle may stop with the wheel in any rotational position, the design may not always be the right way up. Because of this, the choice of design is restricted to rotationally non-varying shapes.

US 5,190,354 discloses a wheel cover for the wheel of a vehicle mounted on a roller bearing, having an eccentric distribution of its mass relative to its axis of rotation.

It is an object of the present invention to provide a wheel cover which can bias the wheel cover body to a determined angular position when the wheel itself rotates, so that a design drawn thereon can clearly be seen at all times, where the biasing is more effective at higher speeds.

It is another object of the present invention to provide a wheel cover wherein the cover body will remain positioned the right way up.

It is another object of the present invention to provide a wheel cover which can be prevented from looking unsightly.

### SUMMARY OF THE INVENTION

According to the invention the means for biasing comprises an air current guide part, which is influenced by the airflow over the wheel cover when the wheel is in motion to bias the cover body to the determined angular position.

Preferably the means for biasing further comprises an eccentric weight.

Preferably the wheel cover comprises: a fixable side part for fixing to the centre of the wheel, to position the cover at the centre thereof, and a movable side part rotatably mounted on the central part of the fixable side part through a bearing.

Preferably the eccentric weight is mounted on said movable side part, in order to bias the movable side part against rotation when the wheel on which it is mounted rotates.

Preferably the wheel cover body is substantially in the shape of a disc and mounted on the movable side part, and arranged to have a space between itself and the wheel.

The weight may be pivotably coupled to the movable side part through a second bearing.

Preferably the weight pivots downwards on the second bearing when the wheel cover body rotates to bring the weight to the upper position on the first bearing.

Preferably the movable side part has a fitting part which narrows upwardly for easy removal of the wheel cover body, and the wheel cover body has a fitting piece on an inside wall thereof, for engaging the fitting part and securing the wheel cover body to the movable side part.

Preferably the wheel cover comprises: a guard, in the shape of a ring, moulded so as to project from the rear of the wheel cover body, and which can prevent the weight fouling should the wheel cover body rotate.

Preferably the weight is arranged to abut the guard when the weight is in the lower position on the bearing.

Preferably the wheel cover is arranged so that when wheel cover body is rotated to bring the weight to the upper position, the weight moves so as not to abut the guard allowing the wheel cover body to be slid downwards to remove the wheel cover body from the wheel.

Preferably the wheel cover body is removed when the weight is moved to the upper part thereof.

The movable side part and weight may be integral.

The weight may be mounted to a lower part of the wheel cover body.

Preferably the wheel cover body is substantially disc shaped.

Preferably the air current guide part is located at the rear of the wheel cover body when the vehicle is moving.

Preferably the air current guide part comprises an outlet.

Preferably the air current guide part defines a generally triangular shape where it joins the wheel cover body, the apex of the triangle arranged to point generally towards the front of the wheel cover body when a vehicle to which the wheel cover is attached is moving.

By 'side part' or 'side fixture' is meant an attachment which attaches to the side of the wheel cover body.

One advantage shown by the present invention is that the wheel cover body remains in substantially the same rotational position when the vehicle is stationary and when it is in motion. Therefore, people can clearly see a design (eg advertisement) depicted on the surface of the wheel cover body. Another is that the wheel will suffer less damage by objects penetrating it in the event of an accident.

In addition, the design will easily attract people's attention; this may be enhanced when the vehicle is stationary, as the weight, and therefore the wheel cover body, is able to pivotably swing to a small extent.

Another advantage is that inspection of the wheel bolt can be carried out easily when the wheel cover body is removed. Therefore, for example, wheels on a bus may be inspected daily before the service commences.

Preferably the air current guide part is in the shape of a nose.

The above and further objects and novel features of the invention will more fully appear from the following detailed description when the same is read in connection with the accompanying drawings. It is to be understood that these are for the purpose of illustration only and are not intended to be a definition of the limits of the invention.

### BRIEF DESCRIPTION OF THE DRAWINGS

Fig. 1 is a perspective view from the rear showing a first embodiment of the present invention;
Fig. 2 is a vertical cross-sectional view showing a first embodiment of the present invention;
Fig. 3 is an explanation view of a fixable side part or fixture according to a first embodiment of the present invention;
Fig. 4 is an explanation view of a movable side part or according to a first embodiment of the present invention;
Fig. 5 is a front view of a wheel cover body showing a first embodiment of the present invention;
Fig. 6 is a perspective view from the rear of a wheel cover body showing a first embodiment of the present invention;
Fig. 7 is a sectional view taken on line 7-7 of Fig. 5;
Fig. 8 is an explanation view showing a movable side part or fixture attached to a fixable side part or fixture;
Fig. 9 is an explanation view showing the way in which a fixable side part or fixture is mounted to a wheel;
Fig. 10 is an explanation view showing the way in which a wheel cover body is mounted to a movable side part or fixture;
Fig. 11 is a cross-sectional view showing the way in which wheel cover body is attached to a movable side part or fixture;
Fig. 12 is an explanation view showing a first embodiment of the present invention in use;
Fig. 13 is an explanation view indicating air current flow during use of a first embodiment of the present invention;
Fig. 14 is a front view showing a second embodiment of the present invention;
Fig. 15 is a vertical cut-away view showing a second embodiment of the present invention;
Fig. 16 is an explanation view of a wheel cover body and a movable side part or fixture;
Fig. 17 is a perspective view from the rear showing a third embodiment of the present invention;
Fig. 18 is a perspective view of a fixable side part or fixture according to a third embodiment of the present invention;
Fig. 19 is a partly cut-away front view of a third embodiment of the present invention;
Fig. 20 is a cross-sectional view showing a fourth embodiment of the present invention in use;
Fig. 21 is an expanded cross-sectional view showing the essential features of a fourth embodiment of the present invention;
Fig. 22 is an exploded perspective view of a fixable side part or fixture and a movable side part or fixture;
Fig. 23 is a perspective view from the rear showing a fifth embodiment of the present invention;
Fig. 24 is a cross-sectional view showing a fifth embodiment of the present invention;
Fig. 25 is a front view of a wheel cover body showing a fifth embodiment of the present invention;
Fig. 26 is a partly cut-away front view showing a sixth embodiment of the present invention;
Fig. 27 is a cross-sectional view showing a sixth embodiment of the present invention;
Fig. 28 is an expanded cross-sectional view showing the essential features of a sixth embodiment of the present invention;
Fig. 29 is a rear perspective view showing a seventh embodiment of the present invention;
Fig. 30 is a cross-sectional view showing a seventh embodiment of the present invention;
Fig. 31 is a partly cross-sectional explanation view showing a wheel cover body separated from a movable side part or fixture;
Fig. 32 is a rear perspective view showing an eighth embodiment of the present invention;
Fig. 33 is an explanation view showing an eighth embodiment of the present invention in use;
Fig. 34 is a perspective view showing an eighth embodiment of the present invention in use;
Fig. 35 is a rear perspective view showing a ninth embodiment of the present invention;
Fig. 36 is a front view showing a ninth embodiment of the present invention;
Fig. 37 is a cross-sectional view of a ninth embodiment of the present invention in use;
Fig. 38 is a rear perspective view showing a tenth embodiment of the present invention;
Fig. 39 is a front view showing a tenth embodiment of the present invention;
Fig. 40 is a cross-sectional view showing a tenth embodiment of the present invention in use;
Fig. 41 is a rear perspective view of back side showing an eleventh embodiment of the present invention;
Fig. 42 is a cross-sectional view of a wheel cover body according to an eleventh embodiment of the present invention;
Fig. 43 is a cross-sectional view showing an eleventh embodiment of the present invention in use;
Fig. 44 is a cross-sectional view showing a twelfth embodiment of the present invention in use;
Fig. 45 is an expanded cross-sectional view showing the main parts of a twelfth embodiment of the present invention;
Fig. 46 is an exploded perspective view showing a twelfth embodiment of the present invention;
Fig. 47 is an explanation view showing a thirteenth embodiment of the present invention in use;
Fig. 48 is a cross-sectional view showing a thirteenth embodiment of the present invention in use;
Fig. 49 is a partly cut-away exploded perspective view showing a thirteenth embodiment of the present invention;
Fig. 50 is a rear perspective view showing a fourteenth embodiment of the present invention;
Fig. 51 is a vertical cross-sectional view showing a fourteenth embodiment of the present invention;
Fig. 52 is an explanatory view of a nonreturn protection showing a fourteenth embodiment of the present invention;
Fig. 53 is a exploded view for explanation about a nonreturn protection showing a fourteenth embodiment of the present invention;
Fig. 54 is a rear perspective view showing a fifteenth embodiment of the present invention;
Fig. 55 is an exploded explanation view of a fitting member showing a fifteenth embodiment of the present invention;
Fig. 56 is an explanation view showing the way in which a fitting member is mounted to a wheel cover according to a fifteenth embodiment of the present invention;
Fig. 57 is an explanation view showing another way in which a fitting member is mounted to a wheel cover according to a fifteenth embodiment of the present invention;
Fig. 58 is a rear perspective view showing a sixteenth embodiment of the present invention;
Fig. 59 is an exploded explanation view of a fitting member showing a sixteenth embodiment of the present invention;
Fig. 60 is a mounted explanation view showing the way in which a movable side part or fixture is mounted to a wheel cover according to a sixteenth embodiment of the present invention;
Fig. 61 is a cross-sectional view taken along the line 61 -61 of Fig. 60;
Fig. 62 is a cross-sectional view taken along the line 62-62 of Fig. 60;
Fig. 63 is an explanation view condition showing how a wheel cover according to a sixteenth embodiment of the present invention can be removed;
Fig. 64 is a rear perspective view showing a seventeenth embodiment of the present invention;
Fig. 65 is an explanation view showing the way in which of a movable side part or fixture is mounted to a wheel cover according to a seventeenth embodiment of the present invention;
Fig. 66 is a perspective view taken along the line 66-66 of Fig. 65;
Fig. 67 is a rear perspective view showing an eighteenth embodiment of the present invention;
Fig. 68 is an exploded explanation view of the fitting member showing an eighteenth embodiment of the present invention;
Fig. 69 is a explanation view showing the way in which a movable side part or fixture is mounted to a wheel cover according to an eighteenth embodiment of the present invention;
Fig. 70 is a cross-sectional view taken along the line 70-70 of Fig. 69; and
Fig. 71 is an explanation view showing how a wheel cover according to an eighteenth embodiment of the present invention may be removed.

### DESCRIPTION OF PREFERRED EMBODIMENTS

Preferred embodiments of the present invention will now be described in more detail below referring to the accompanying drawings.

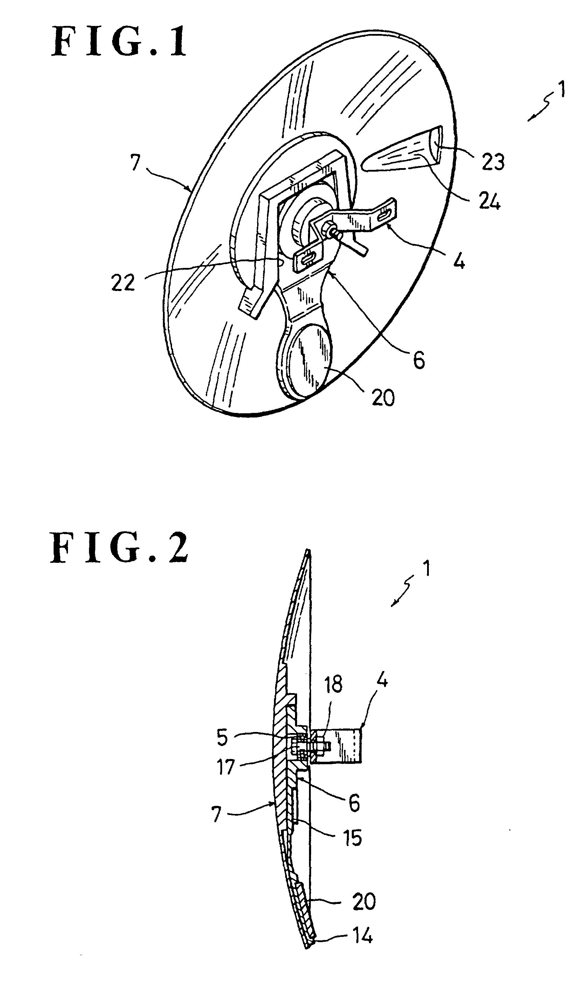

Figs. 1 to 13 illustrate a first embodiment of the present invention wherein a wheel cover 1 is mounted on a wheel 3 of the vehicle; in this embodiment, it is mounted on a passenger car 2. The wheel cover 1 comprises a fixable side fixture 4, a movable side fixture 6 and a wheel cover body 7 in the shape of a disc. The fixable side fixture 4 is fixably mounted in a position so that the central part thereof can be positioned at the centre of the wheel 3. The movable side fixture 6 is rotatably mounted to the central part of the fixable side fixture 4 through a bearing 5. The wheel cover body 7 is mounted to the movable side fixture 6 while the wheel cover body 7 has a space between itself and the wheel 3.

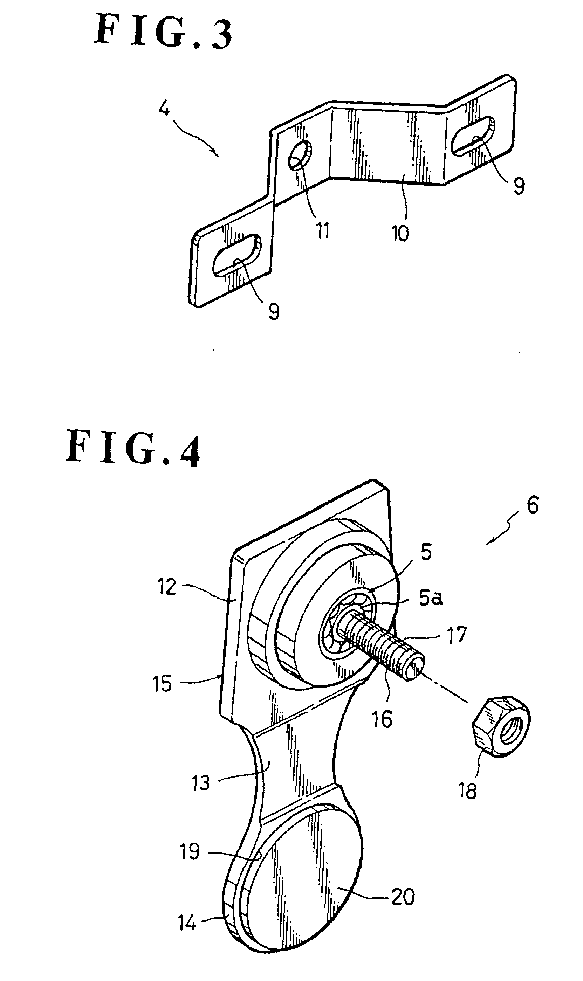

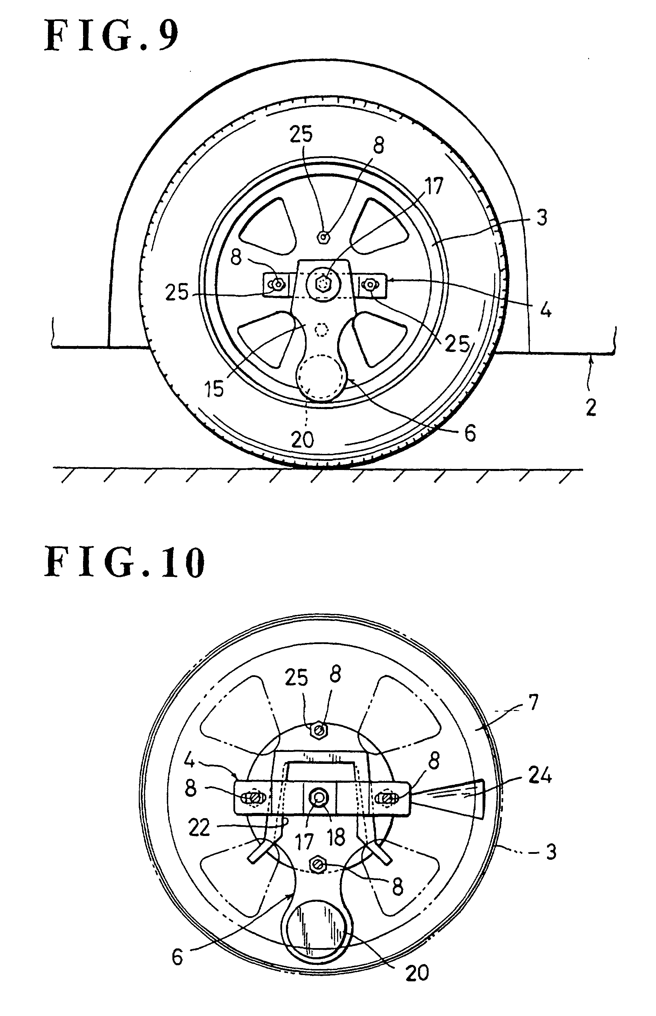

As illustrated in Fig. 3, the fixable side fixture 4 comprises a fixable side fixture body 10 having an axle insertion hole 11 in the central part of said fixture body. Wheel bolt holes 9,9 located at both sides thereof are provided to receive wheel bolts 8,8 (see Fig. 9) for fixing. The fixable side fixture body 10 is formed in the shape of a roof. The axle insertion hole 11 is located in the central portion of the fixable side fixture body 10.

As illustrated in Fig. 4, the movable side fixture 6 comprises a movable side fixture body 15, a ball race 5 as a bearing, an axle 17, a nut 18 and a weight 20. The movable side fixture body 15 is made of hard rubber or synthetic resin materials; the upper part thereof consists of a fitting piece 12 in the shape of a square; a weight supporting part 14 through a connection 13 is located in the lower part thereof. The ball race 5 is fixed to the nearly central part of the fitting piece 12 of the movable side fixture body 15. The axle 17 is fitably fixed to a rotating ring 5a within the ball race 5, inserted through an axle insertion hole 11 of the fixable side fixture 4. The nut 18 fixes the axle 17 to the fixable side fixture 4 by securing to the threaded part 16 of the axle 17. A weight 20 is fixed with adhesive to a weight storage recess 19 formed in the weight supporting part 14.

Moreover, when the air valve projects beyond the surface of the tyre of the wheel 3, the lower part of the movable side fixture 6 is planed at the place so as not to touch the air valve.

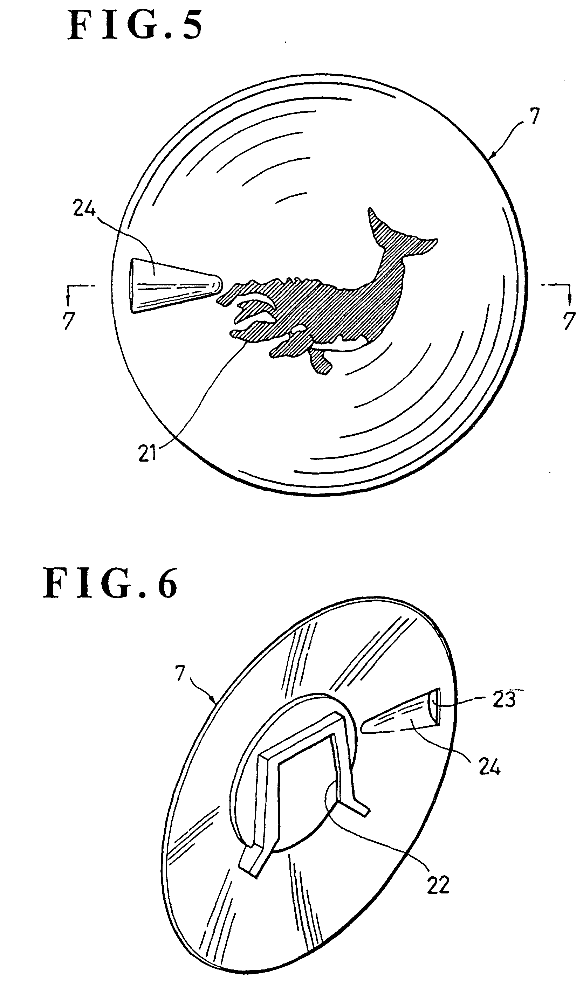

On the wheel cover body 7 is drawn a design 21; the design may be, for example, an advertisement. As illustrated in Figs. 5 to 7, the wheel cover body 7 is made of metal or synthetic resin material and comprises a fitting part 22 and an air current guide part 24. The fitting part 22 is located in the central part of the inner wall of the wheel cover body 7; as it is formed in the shape of a channel and widens out to an angle, it can be removably inserted. The air current guide part 24 takes the shape of a nose, the air outlet 23 positioned to the rear when the vehicle is in motion.

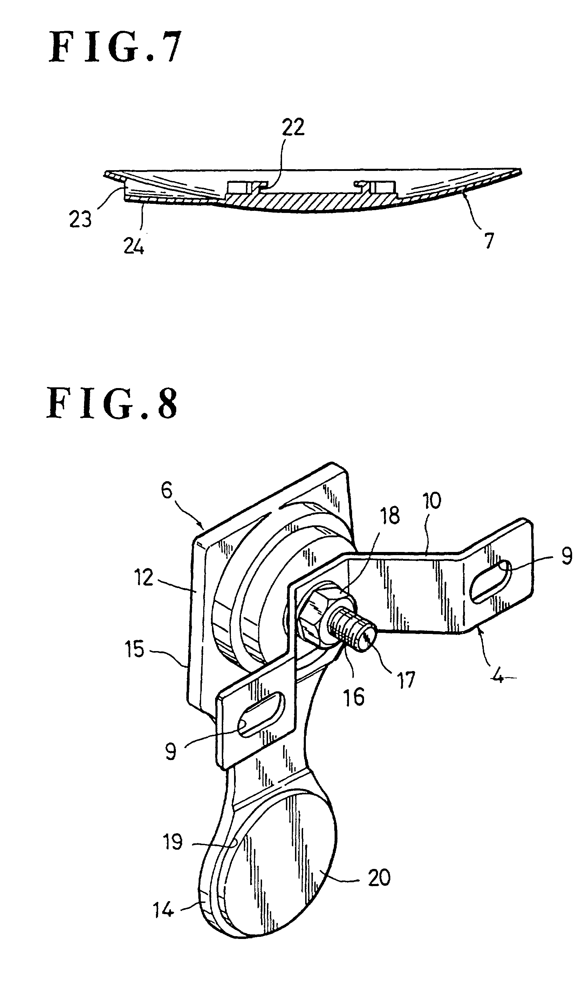

In the above-mentioned wheel cover 1, as illustrated in Fig. 8, the axle 17 of the movable side fixture 6 is inserted into the corresponding hole 11 of the fixable side fixture 4. Then, the nut 18 is screwed into the axle 17 and the movable side fixture 6 is mounted on the fixable side fixture 4. Following this, as illustrated in Fig. 9, the nut 25,25, screwed in the wheel 3, is removed. After the wheel bolts 8,8 are inserted into their corresponding holes 9,9 formed on either side of the fixable side fixture 4; the nuts 25,25 are screwed in the wheel bolts 8,8 and locked.

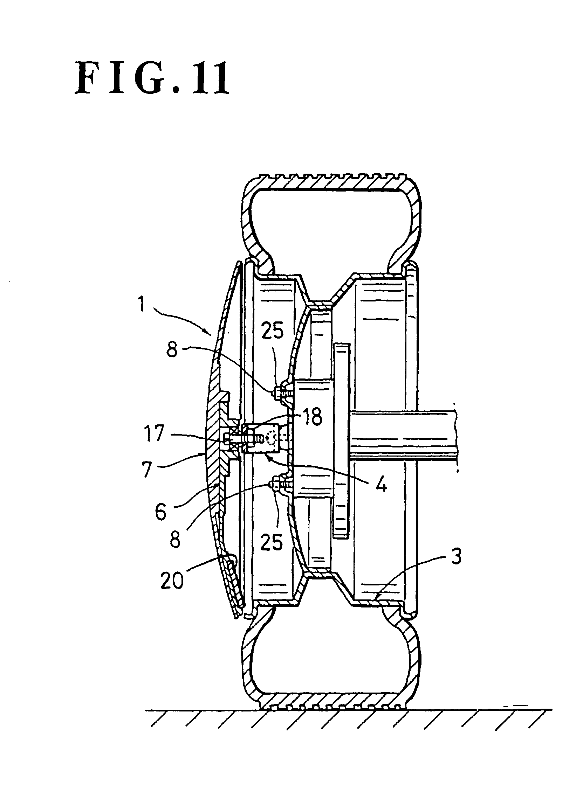

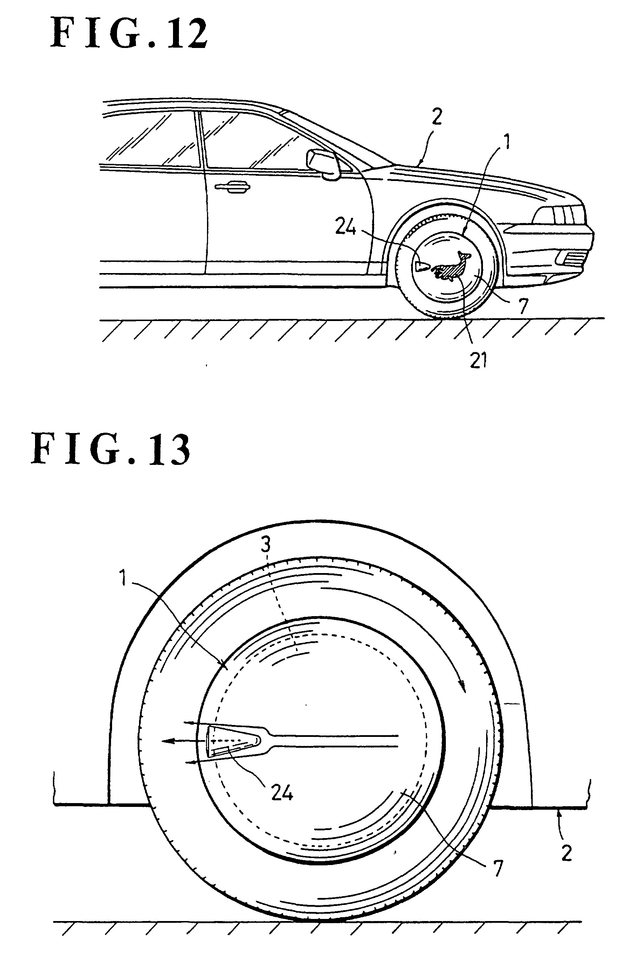

Additionally, as illustrated in Figs. 10 and 11, the fitting piece 12 (see Fig. 8) of the movable side fixture 6 is set in the fitting part 22 of the wheel cover 7. Then, the connection 13 (see Fig. 4) of the movable side fixture body 15 improves the flexibility of the arrangement, and the connection 13 and weight supporting part 14 attach closely with the inner wall of the wheel cover body 7. In the above mentioned wheel cover 1 fixed to the wheel 3, the air current guide part 24 of the wheel cover body 7 as illustrated in Fig. 12 is directed to the rear of the passenger car 2 due to the weight 20 of the movable side fixture 6.

In this case, the fixable side fixture 4 will rotate with the wheel 3 when the car 2 moves, but rotation of the movable side fixture 6 and the wheel cover body 7 is prevented due to the weight 20 and ball race 5 acting as an anchor.

Moreover, as illustrated in Fig. 13, an air current occurs when the car 2 is in motion, but the air current flowing to the surface of the wheel cover body 7 flows along the upper and lower parts of the air current guide part 24 and rotation of the wheel cover body 7 is further constrained because the air inside the wheel cover body 7 is sucked out of the air outlet 23, and rotation of the wheel cover body 7 is prevented.

Rotation of the wheel cover body 7 is more completely restricted whenever the flow of an air current is faster; *ie* the speed of the passenger car 2 is faster.

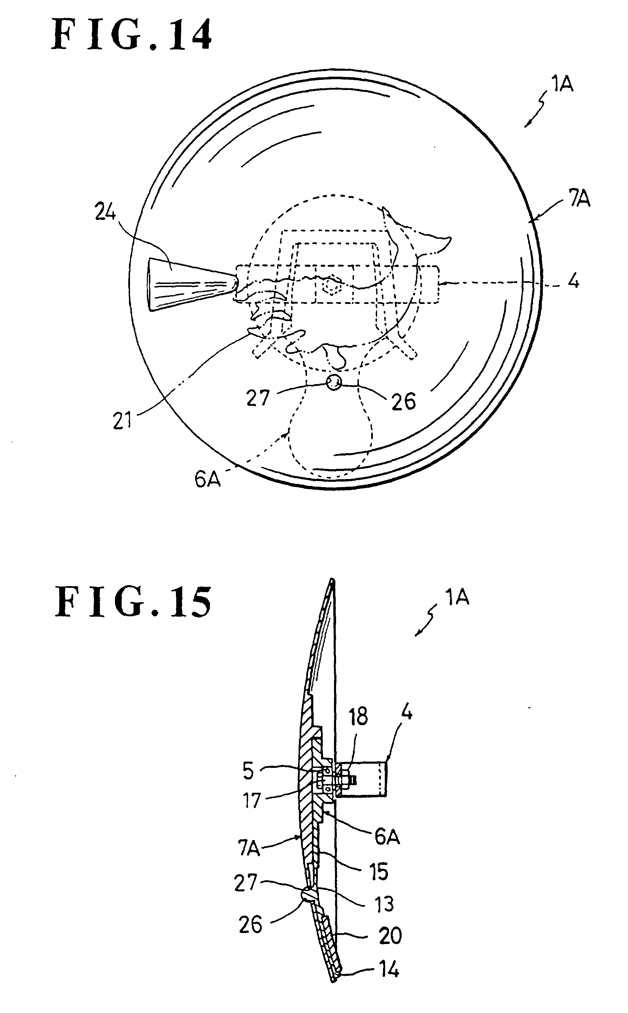

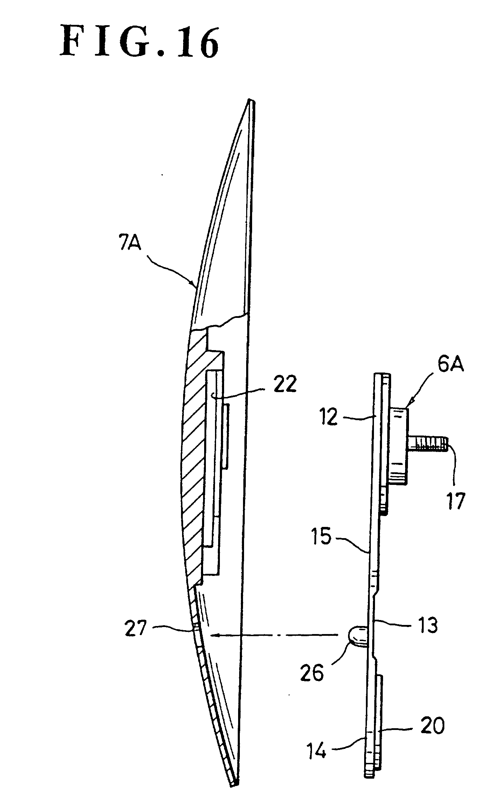

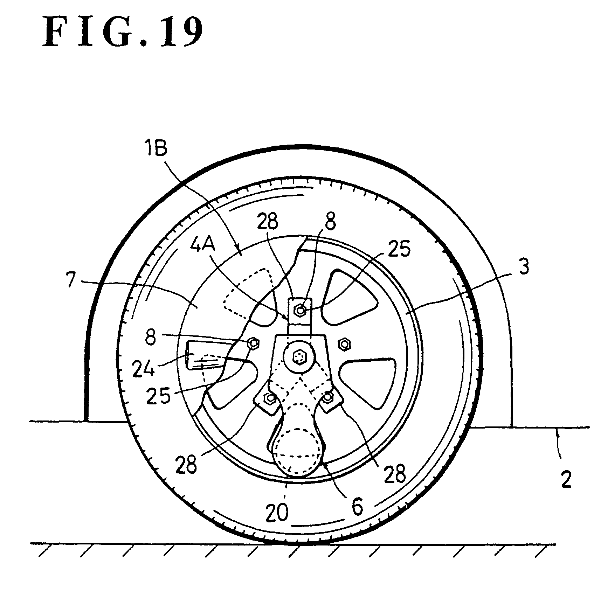

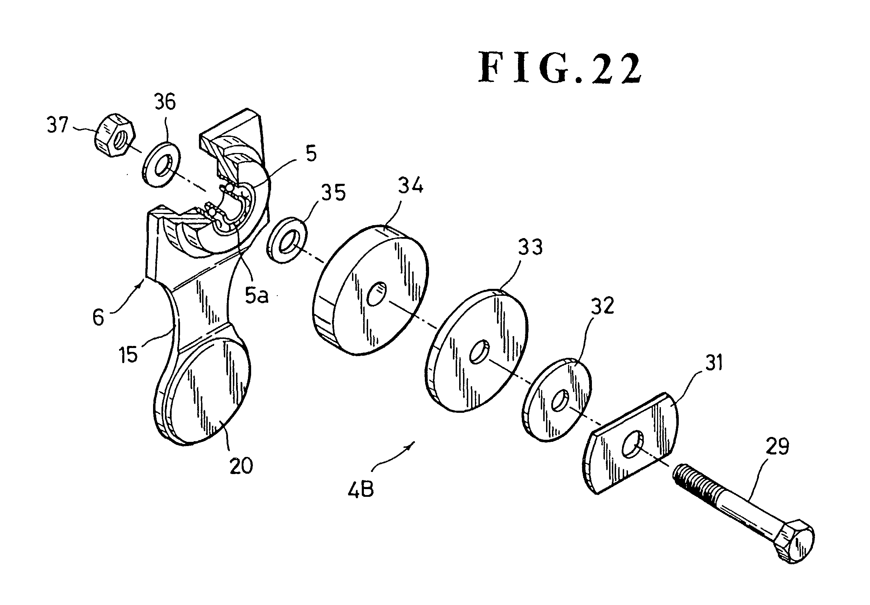

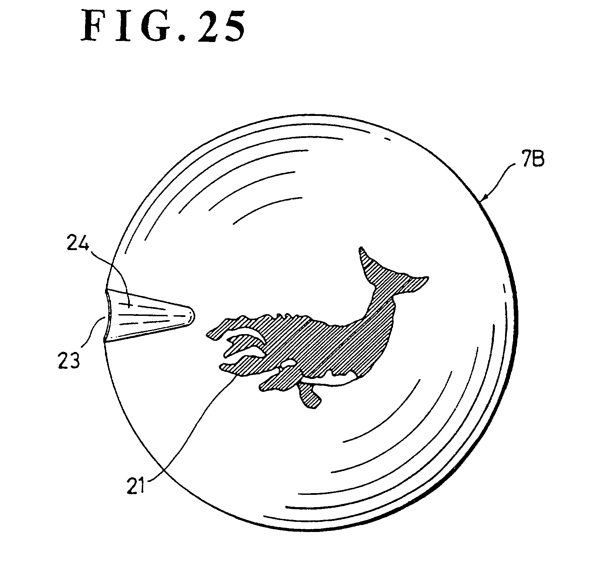

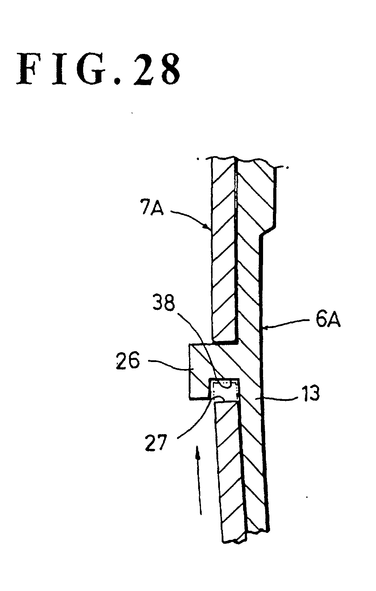

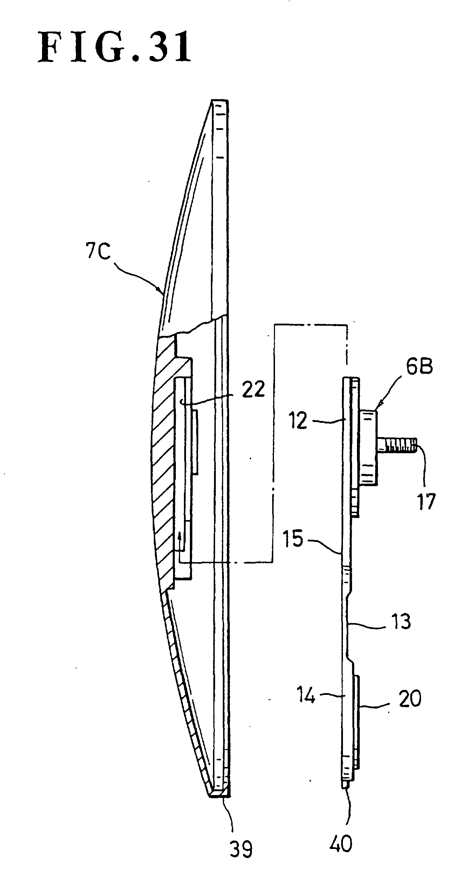

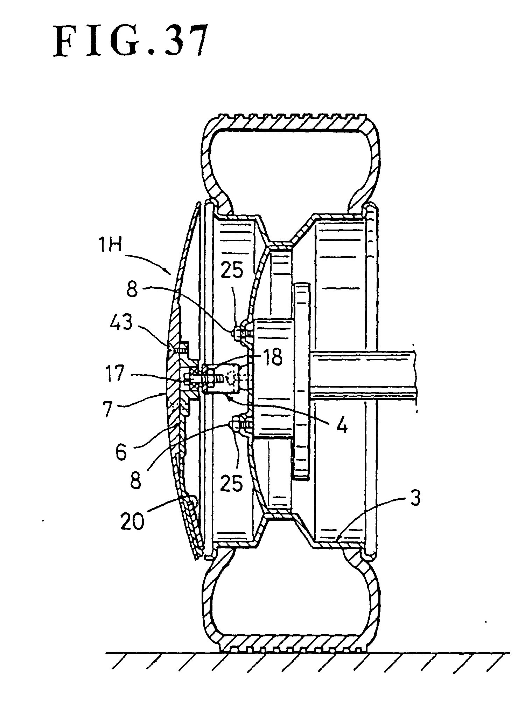

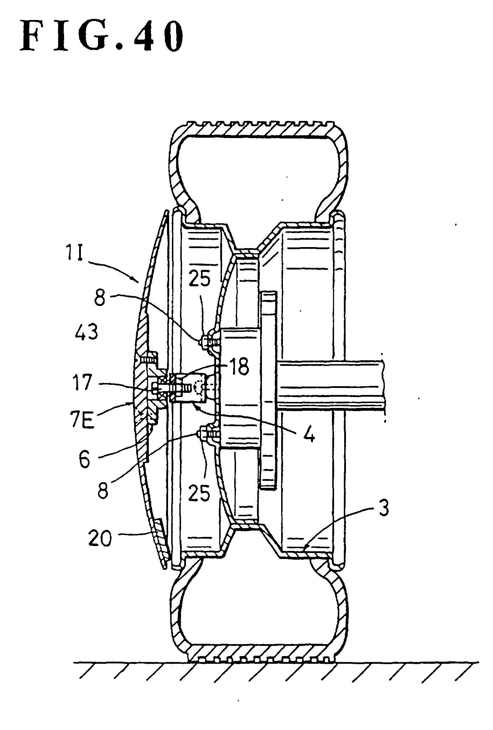

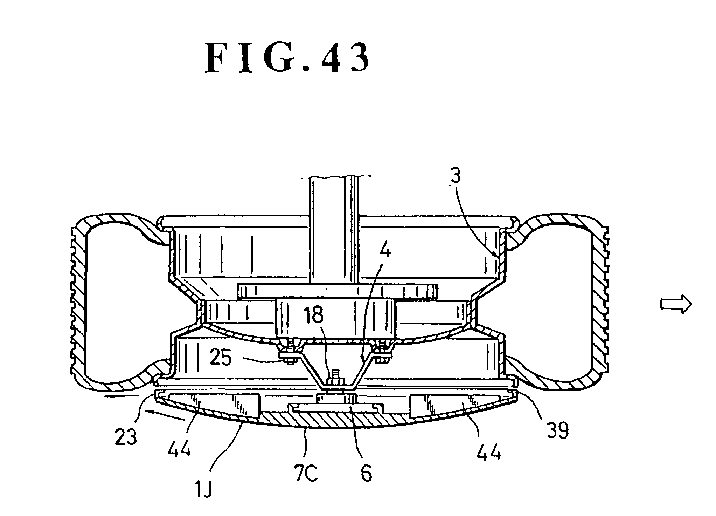

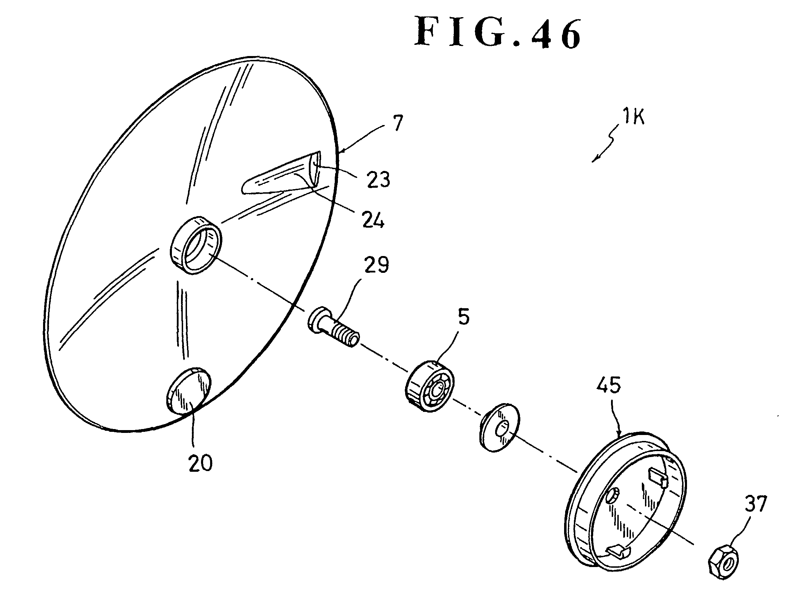

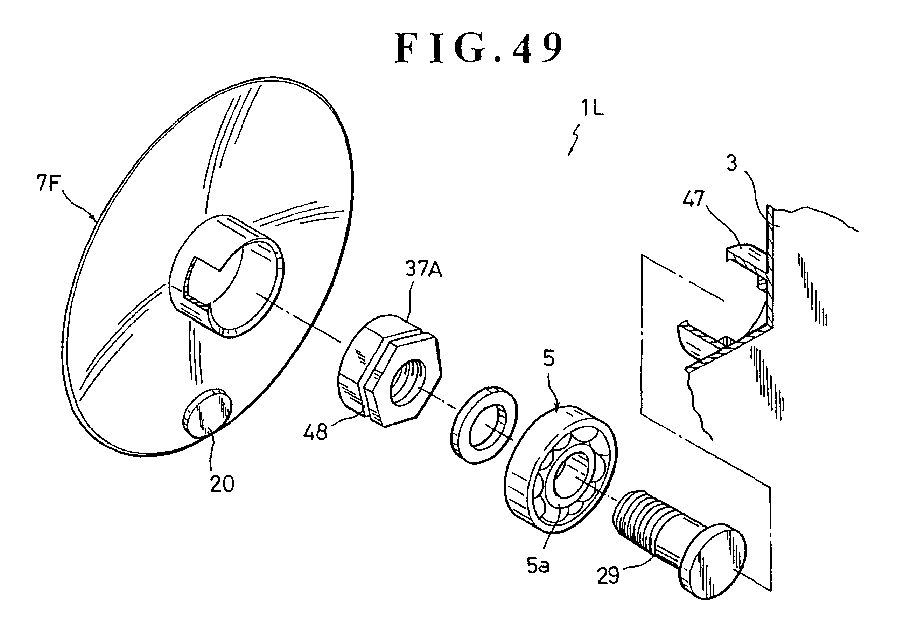

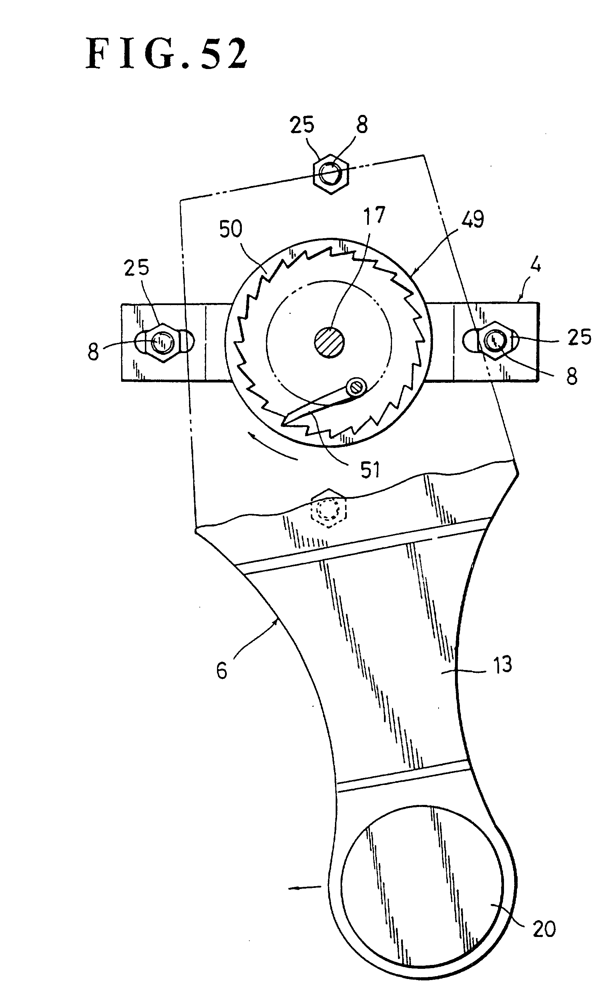

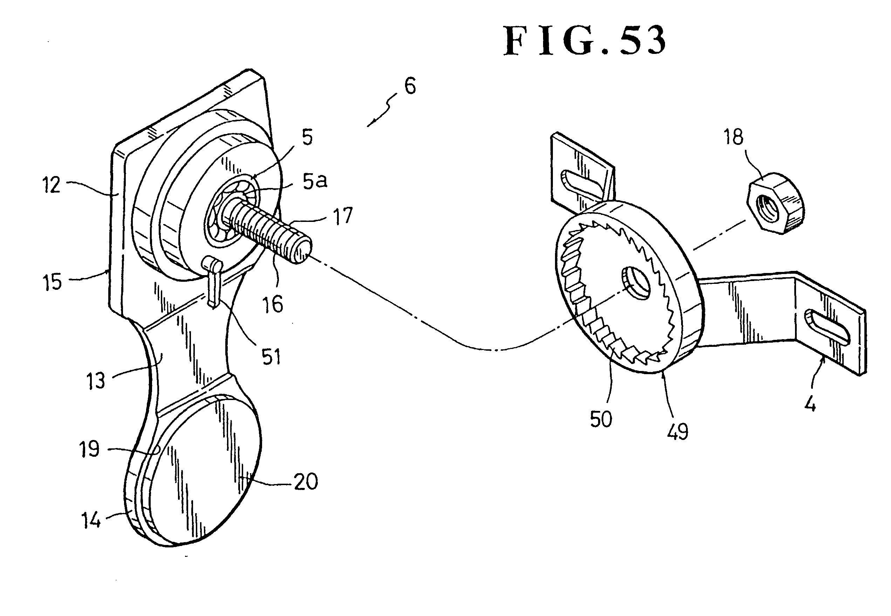

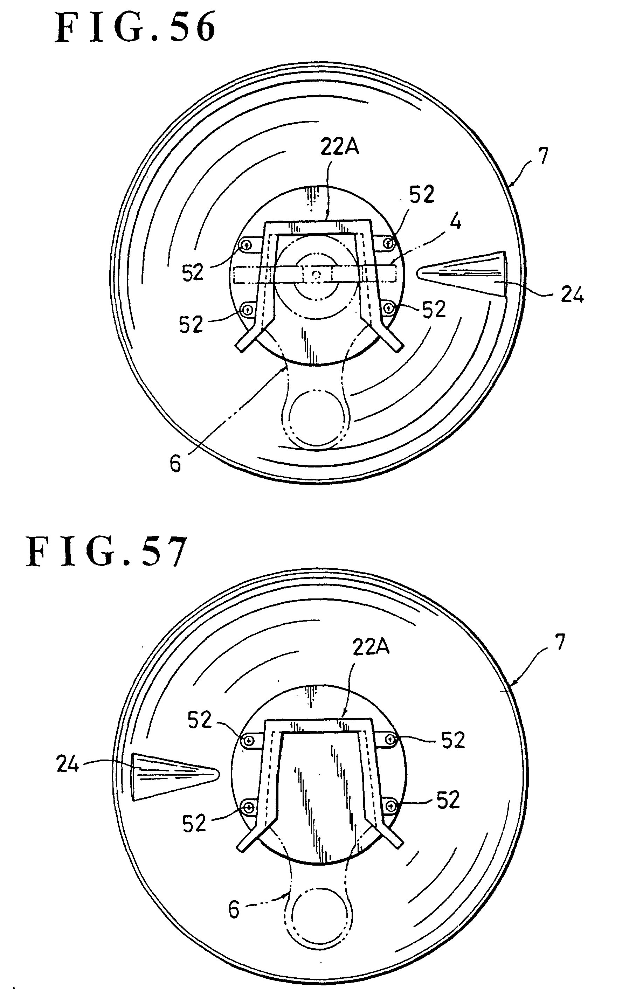

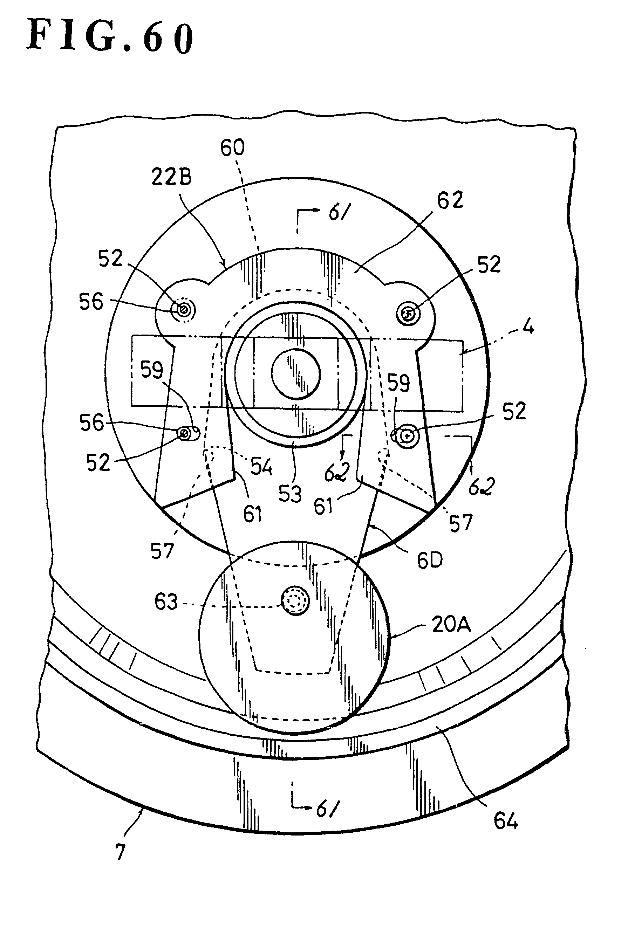

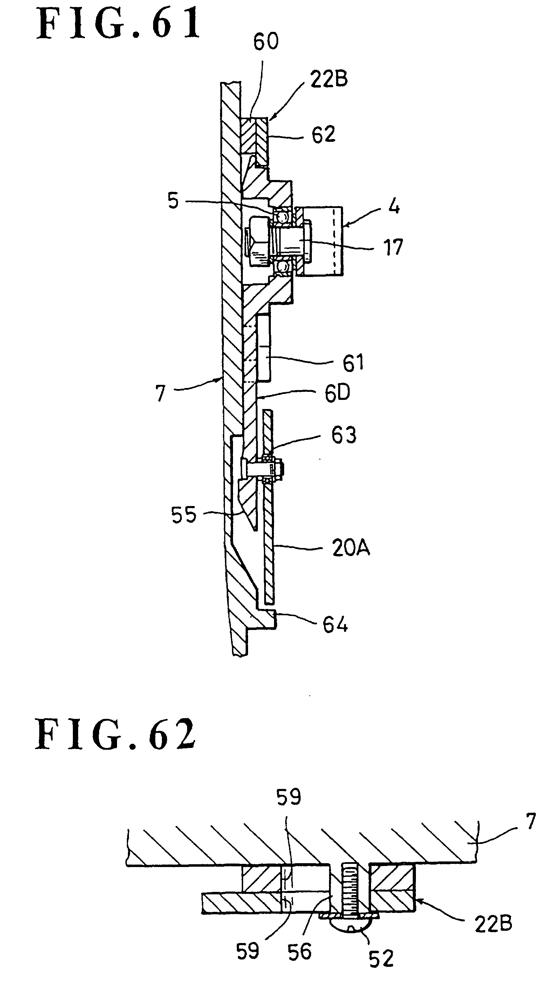

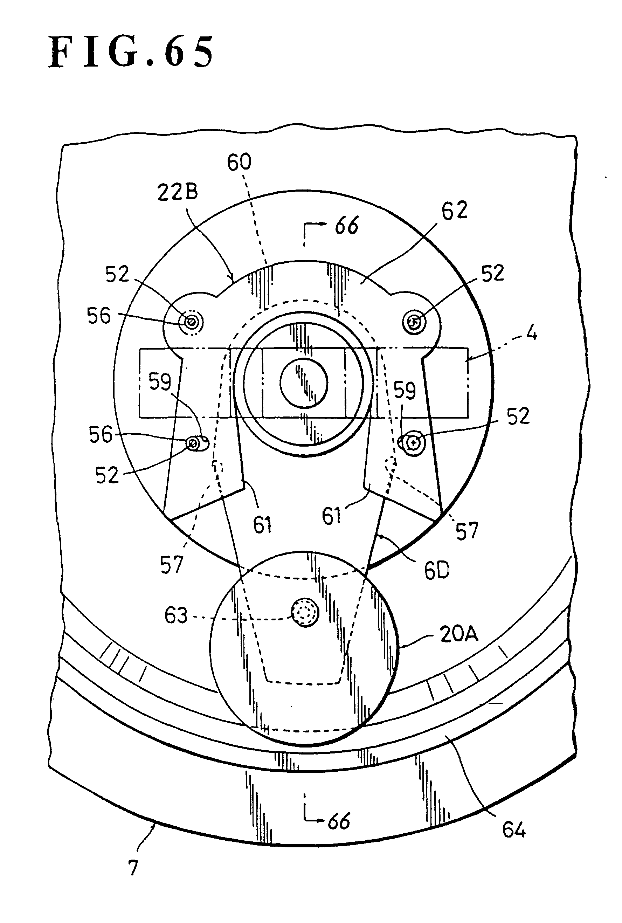

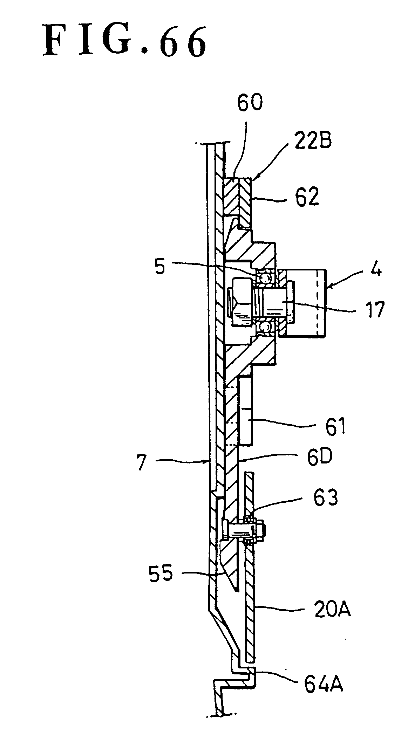

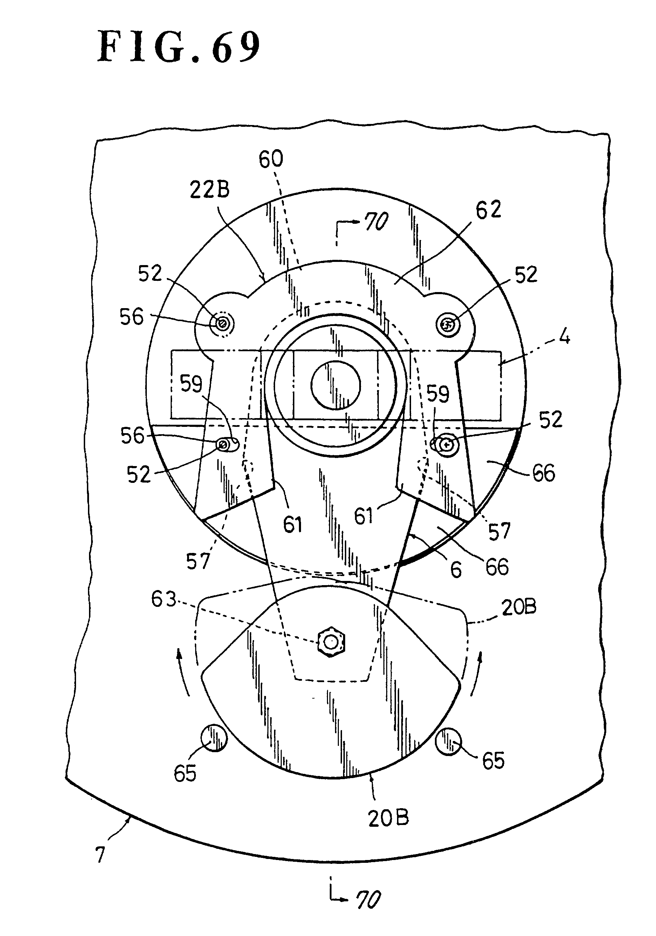

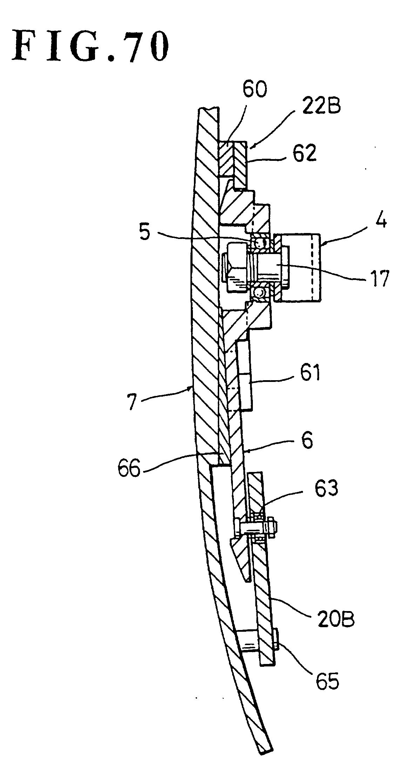

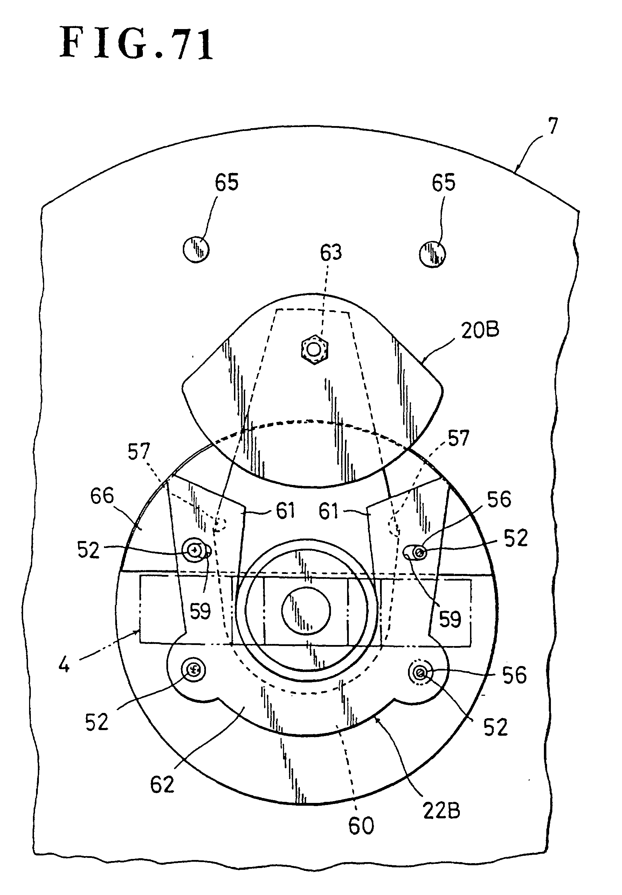

Other embodiments of the present invention will now be described referring to Figs. 14 to 71. Throughout the drawings of the embodiments, components identical to those in the first embodiment are denoted by the same numerals as of the first embodiment (but with letters added thereafter) and will not be explained further.

Figs. 14 to 16 illustrate a second embodiment of the present invention. It is distinguished from the first embodiment in that the movable side fixture 6A includes a fitting piece 26 for the outer part of the connection 13, and in that the wheel cover body 7A includes a fitable hole 27 through which the fitting piece 26 of the movable side fixture 6A is inserted when it is fixed. A wheel cover 1A with the movable side fixture 6A and wheel cover body 7A according to the second embodiment will have similar advantages to that according to the first embodiment; in addition, the fitting piece 26 can efficiently prevent removal of the wheel cover body 7A from the movable side fixture 6A.

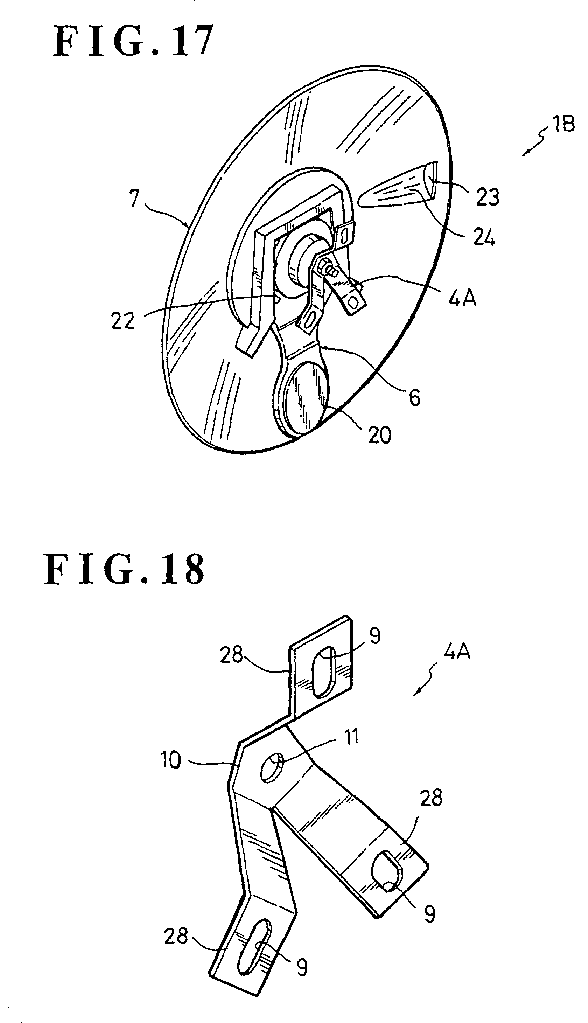

Figs. 17 to 19 illustrate a third embodiment of the present invention; this is distinguished from the first embodiment in that the fixable side fixture 4A has three legs 28, 28, 28; these legs are capable of fixing to the vehicle 2 and are able to fix to the wheel 3 with the uneven number of wheel bolts 8. A wheel cover 1B with the fixable side fixture 4B according to the third embodiment will have similar advantages to that according to the first embodiment.

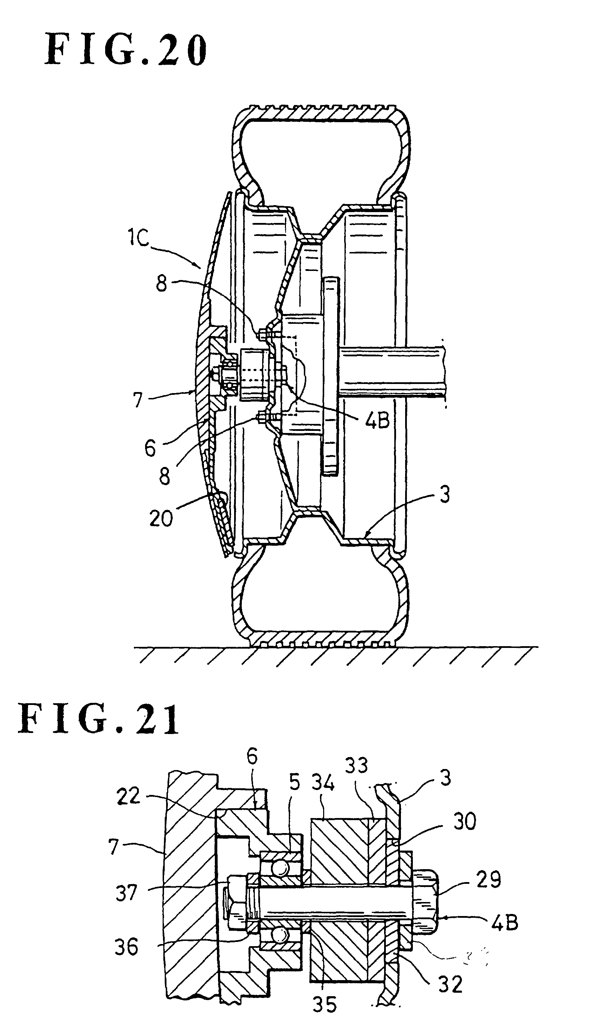

Figs. 20 to 22 illustrate a fourth embodiment of the present invention; this is distinguished from the first embodiment in that the fixable side fixture 4B comprises a bolt 29, a securing plate 31 and a centring plate 34, and the movable side fixture 6, on which is mounted the ball race 5, acting as a bearing, and having the rotating ring 5a holdably fixed on top part of the bolt 29 of the fixable side fixture 4B with washers 35, 36 and a nut 37. The securing plate 31, which is shaped like an oval or a race track (*ie* a rectangle with two opposite semicircular edges), has a diameter less than that of the axle hole 30, through which the bolt 29 is inserted. The securing plate 31 is positioned on the inside of the wheel 3 and can be secured to either side of the centre of the wheel 3. The centring board 32 is inserted at the centre part of the wheel 3 into the axle hole 30, through which the bolt 29 inserted; the centring board conducts the centring. The bolt 29 is inserted through the holes in the centre of the spacer 33 and holding board 34 are inserted the bolt 29 in the centre thereof. A wheel cover 1C with the fixable side fixture 4B and movable side fixture 6 according to the fourth embodiment will have similar advantages to that according to the first embodiment; in addition, the wheel cover 1C can be secured to the wheel 3 if the nut 25 of the wheel bolt 8 is removed.

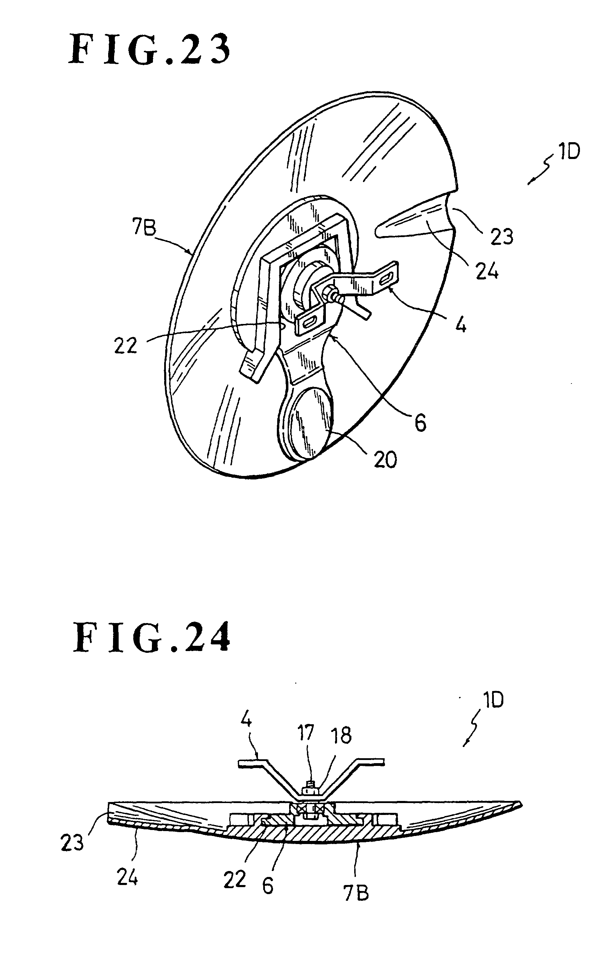

Figs. 23 to 25 illustrate a fifth embodiment of the present invention; this is distinguished from the first embodiment in that the air current guide part 24 extends to the edge of the wheel cover body 7B so that the air outlet 23 is also at the edge thereof. A wheel cover 1D with the wheel cover body 7B which includes the air current guide part 24 according to the fifth embodiment will have similar advantages to that according to the first embodiment.

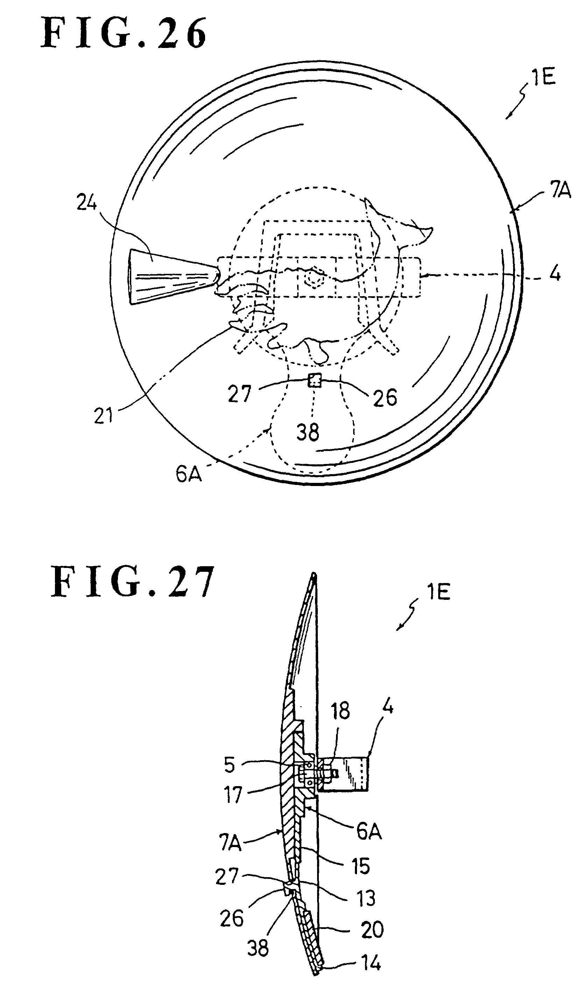

Figs. 26 to 28 illustrate a sixth embodiment of the present invention; this is distinguished from the second embodiment in that the wheel cover 1E has a structure such that there exists a set gap 38 formed in the fitting piece 26 through which the end of the fitable hole 27 may protrude. This arrangement is capable of preventing the wheel cover body 7A from moving when the vehicle moves forwards, because the fitting piece 12 of the movable side fixture 6A engages the fitting part 22 of the two wheel cover body 7A. The wheel cover 1E according to the sixth embodiment will have similar advantages to that according to the second embodiment; in addition, part of the edge of the fitable hole 27 creeps in the set gap 38 of the fitting piece 26 with the movable side fixture 6A if kite wheel cover body 7A removes due to being out of order, so that removal of the wheel cover body 7A can be prevented.

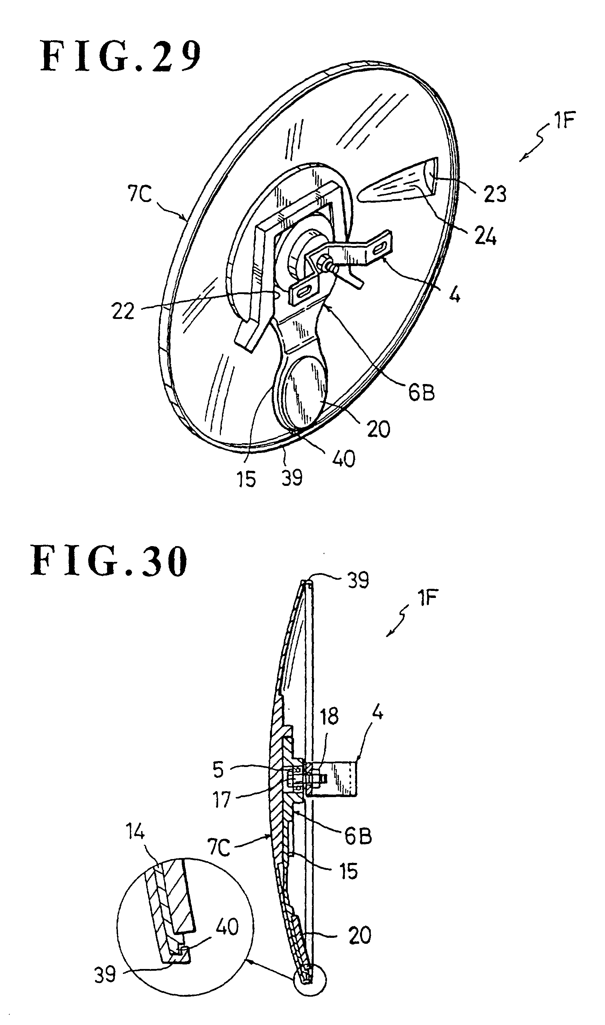

Figs. 29 to 31 illustrate a seventh embodiment of the present invention; this is distinguished from the first embodiment in that a formed a flange 39 bent inside part projects from the outer edge wheel cover body 7C towards the central area thereof and a movable side fixture 6B includes an engagement means 40 which can engage with the flange 39 when the wheel cover body 7C is mounted on the lower part of the movable side fixture 15. A wheel cover 1F according to the seventh embodiment will have similar advantages to that according to first embodiment; in addition, moving in a direction which leads to removal of the wheel cover body 7C can be prevented because the engagement means 40 of the movable side fixture 6B can engage with the flange 39 of the wheel cover body 7C.

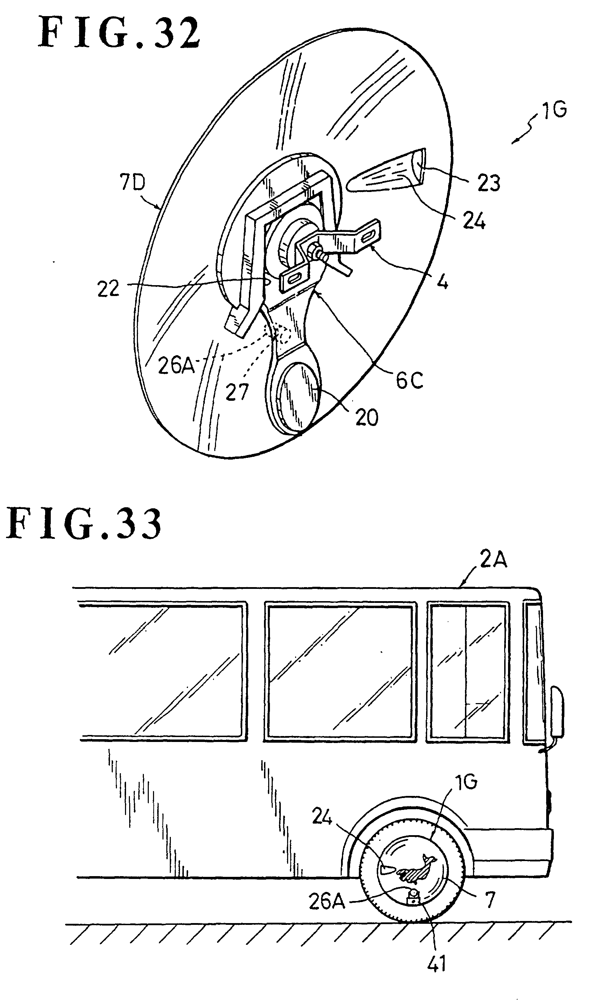

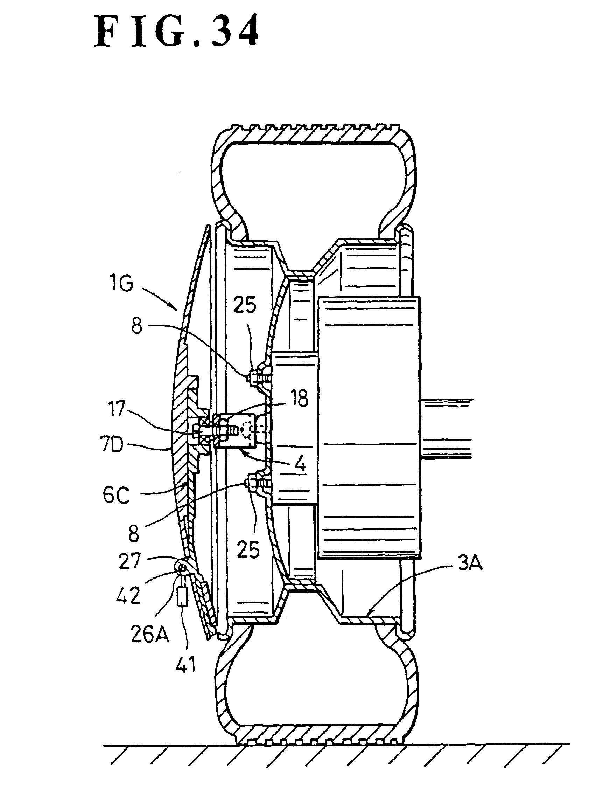

Figs. 32 to 34 illustrate an eighth embodiment of the present invention; this is distinguished from the first embodiment in that the wheel cover 1G comprises the fixable side fixture 4 (as in the first embodiment), a fitting piece 26A which includes an insertion hole 42 through which a lock 41 can be inserted. The fitting piece 26A, including the hole 42, protrudes through the fitable hole 27, which is located on the outside of the nearly outer part of the wheel cover body 7D, and forms part of the weight supporting part 14 of the movable side fixture 6C. In the case of this particular wheel cover 1G, it is more difficult to remove the wheel cover body 7D from the movable side fixture 6C because the fitting piece 26A of the movable side fixture 6C can insert into the fitable hole 27 of the wheel cover body 7D. Moreover, as illustrated in Fig. 34, theft of the wheel cover body 7D is made much more difficult because the lock 41 is inserted through to the hole 42 of the fitting piece 26A.

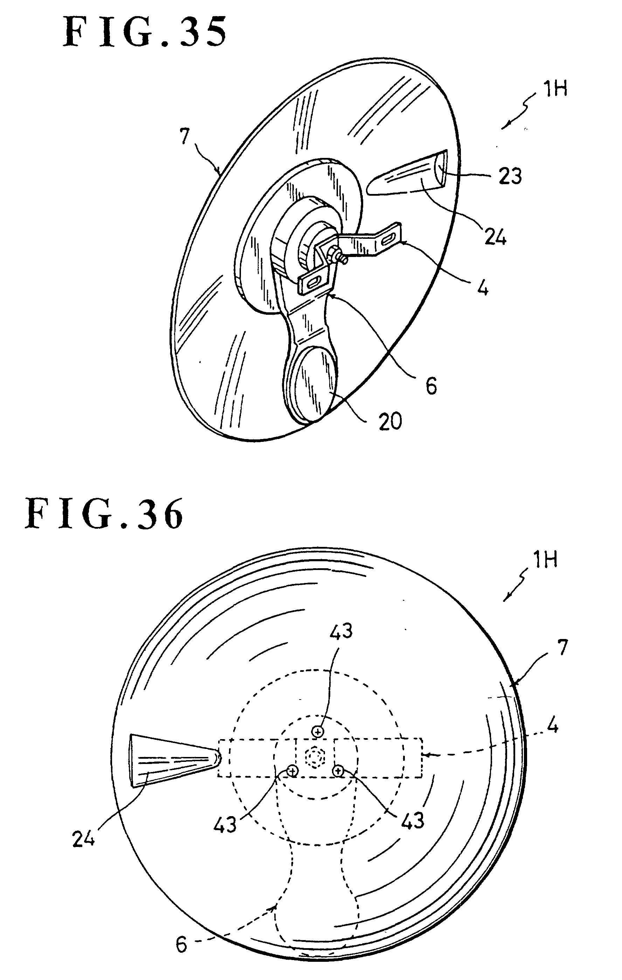

Figs. 35 to 37 illustrate a ninth embodiment of the present invention; this is distinguished from the first embodiment in that the mounting the movable side fixture 6 is mounted to the wheel cover body 7 by means of several screws 43 (three this case). A wheel cover 1H according to the ninth embodiment will have similar advantages to that according to the first embodiment.

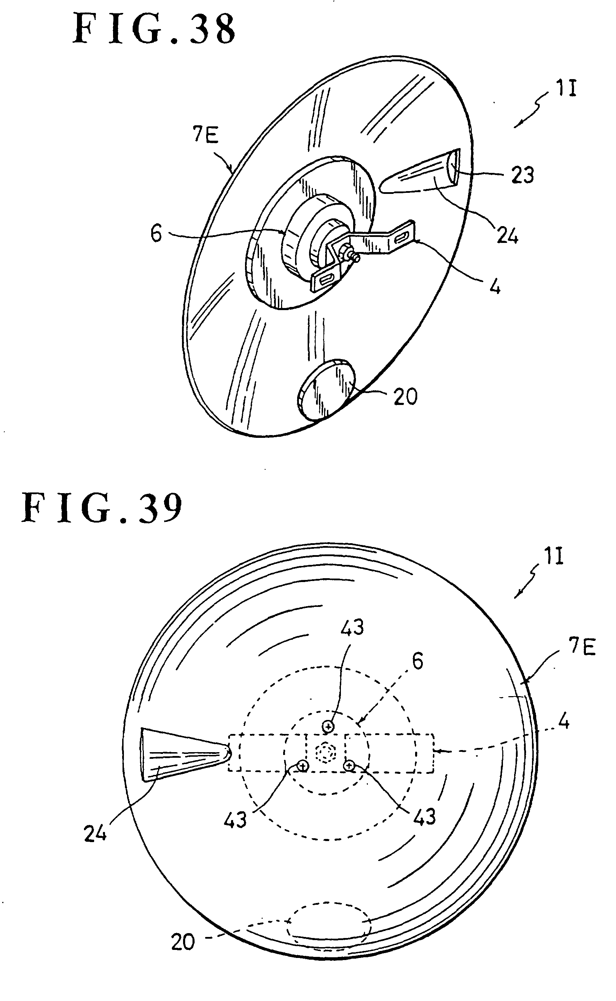

Figs. 38 to 40 illustrate a tenth embodiment o f the present invention; this is distinguished from the ninth embodiment in that the weight 20 is fixed with a screw or adhesive, or welded, to the lower part of the back face of the wheel cover body 7E. A wheel cover 1I with the wheel cover body 7E according to the tenth embodiment will have similar advantages to that according to the ninth embodiment.

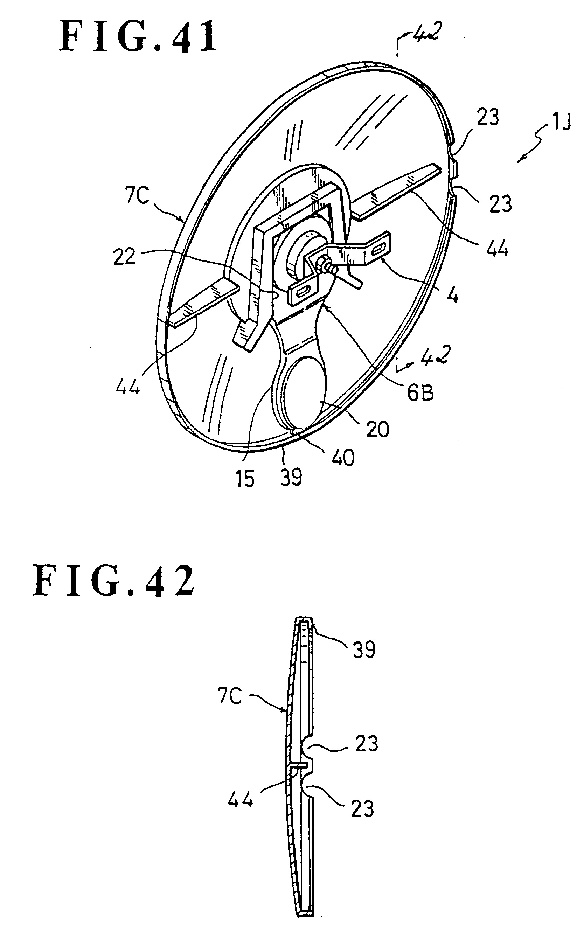

Figs. 41 to 43 illustrate an eleventh embodiment of the present invention; this is distinguished from the seventh embodiment in that multiple air outlets 23, 23 are located at the rear edge of the wheel cover body 7C. In addition, reinforcement boards 44,44 are present at the back of the wheel cover body 7C on its horizontal axis, facing in both front and rear directions. The wheel cover body 7C according to the eleventh embodiment will have similar advantages to that according to the seventh embodiment.

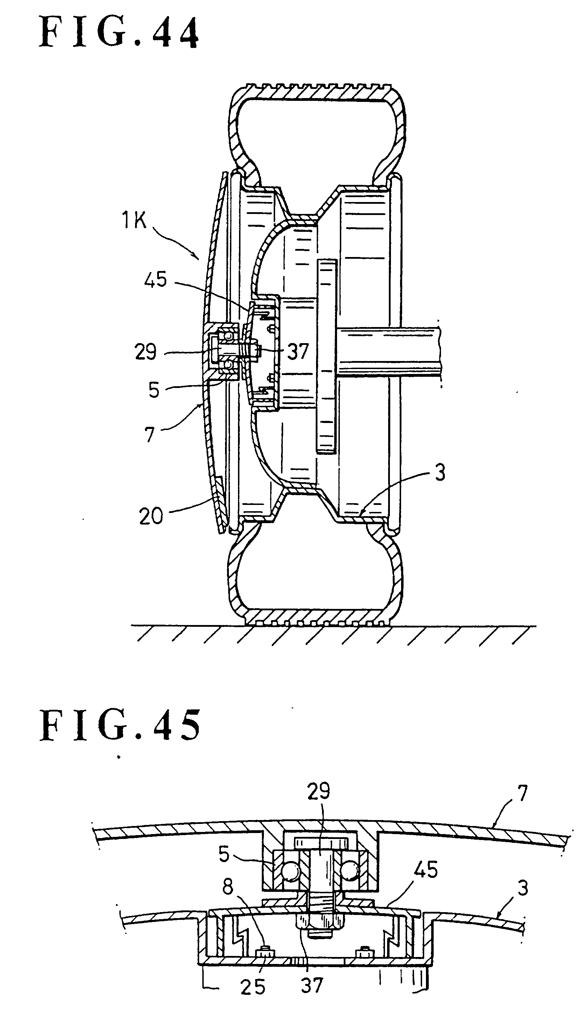

Figs. 44 to 46 illustrate a twelfth embodiment of the present invention; this is distinguished from the first embodiment in that the wheel cover body 7 mounted to the wheel bolt cover 45 covers only the part of the wheel bolt 8 of the wheel 3 through the ball race 5 as a bearing with the bolt 29 and nut 37 and in that the weight 20 is fixed to the lower part of the back of the wheel cover body 7. A wheel cover 1K according to the twelfth embodiment will have similar advantages to that according to the first embodiment. Moreover, in this embodiment, the fixing structure of the wheel bolt cover 45 and wheel cover body 7 is available to use any structures rotatably mounted to the wheel cover body 7.

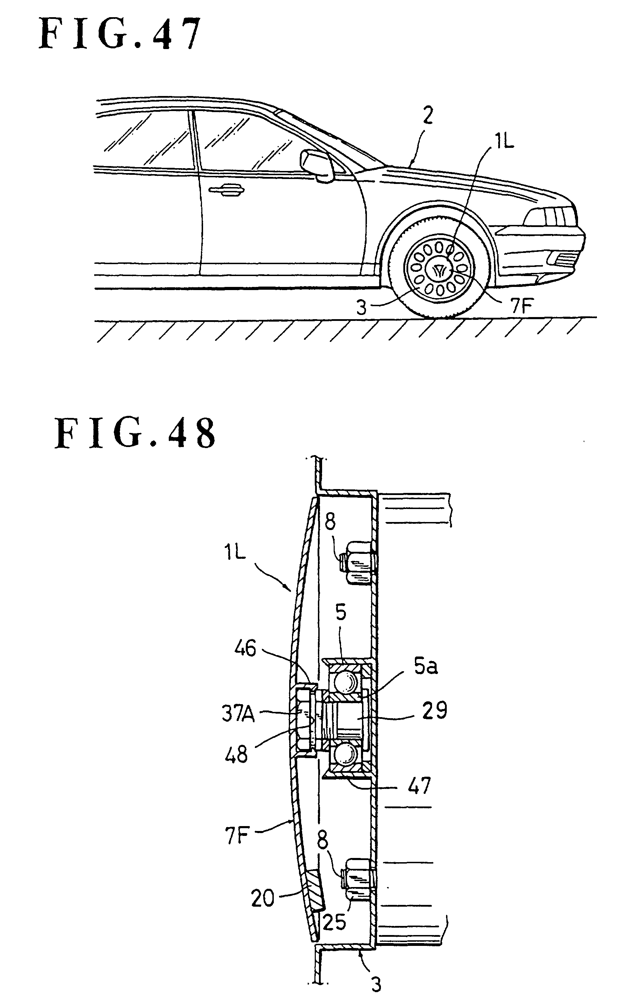

Figs. 47 to 49 illustrate a thirteenth embodiment of the present invention; this is distinguished from the first embodiment in that an engagement piece 46 in the shape of a ring is present at the back of the wheel cover body 7F; said wheel cover body 7F covers to only part of the wheel bolt of the wheel 3 and the ball race 5 as an anchor, present at the central part of the wheel 3, and engageably fixed to a fitting part 47. Moreover, the wheel cover body 7 is mounted by inserting the bolt 29 as the movable side fixture into the rotating ring 5a of the ball bearing 5, and screwing the bolt 29 with a nut 37A formed a fining gap 48 removing engaged the engagement means 46 in the shape of a ring at the outer part thereof. A wheel cover 1L according to the thirteenth embodiment will have similar advantages to that according to the first embodiment.

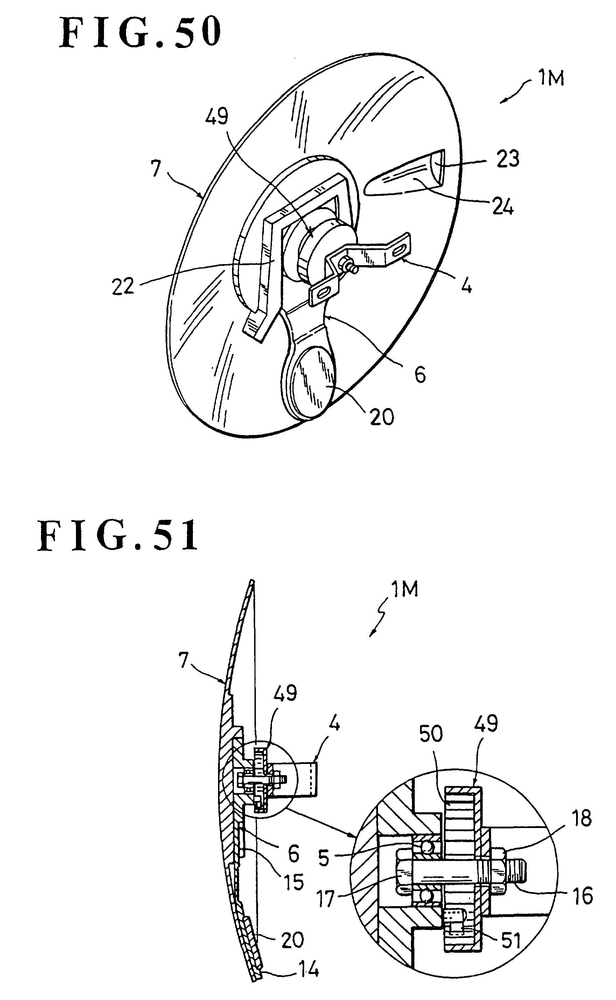

Figs. 50 to 53 illustrate a fourteenth embodiment of thepresent invention; this is distinguished from the first embodiment in that a nonreturn protection device 49 can prevent backspin of the wheel cover body 7. A wheel cover 1M with the nonreturn protection 49 can prevent pivoting the wheel cover body 7 more efficiently when the vehicle stops. The nonreturn protection 49 comprises a ratchet gear 50 fixed to the wheel side fixture 4 and a set piece for nonreturn prevention 51, geared with the ratchet gear 50, pivoted by the movable side fixture 6. Additionally, the nonreturn protection 49 provide the same effects if a commercially available bearing rotating one way, is used instead of the ball race 5 as a bearing.

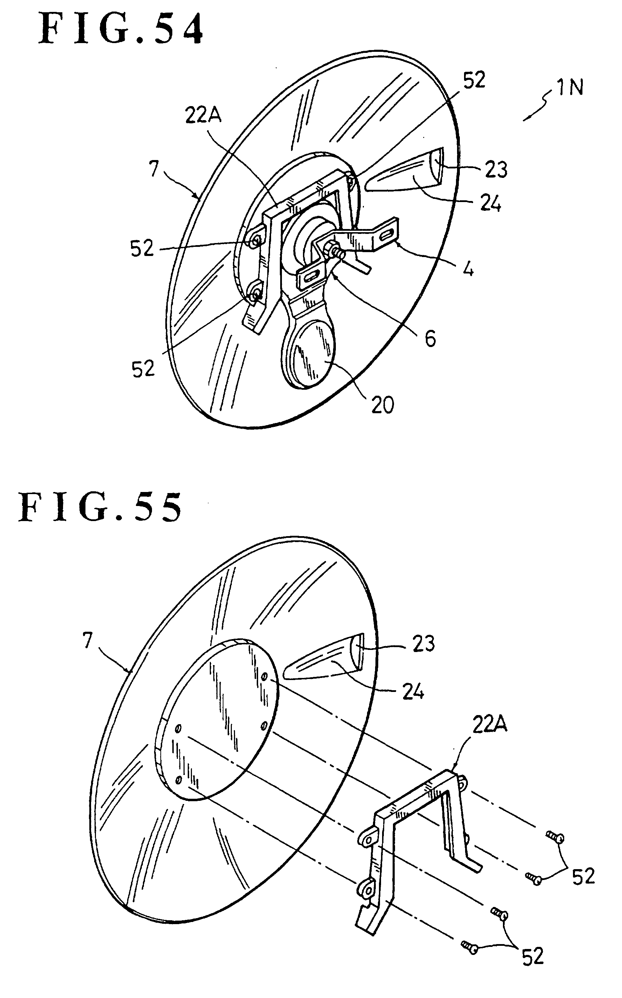

Figs. 54 to 57 illustrate a fifteenth embodiment of the present invention; this is distinguished from the first embodiment by the fact that a fitting part 22A, removably fitted the fitting piece 12 of the movable side fixture body 15 at the back of the wheel cover body 7, can be fixed to the upper and lower part by a plurality of screws 52 (four in this case). A wheel cover IN wherein the fitting part 22A is mounted to the wheel cover body 7 by means of screws can be used to mount to the wheel of right and left only the mounting direction of the fitting part 22A.

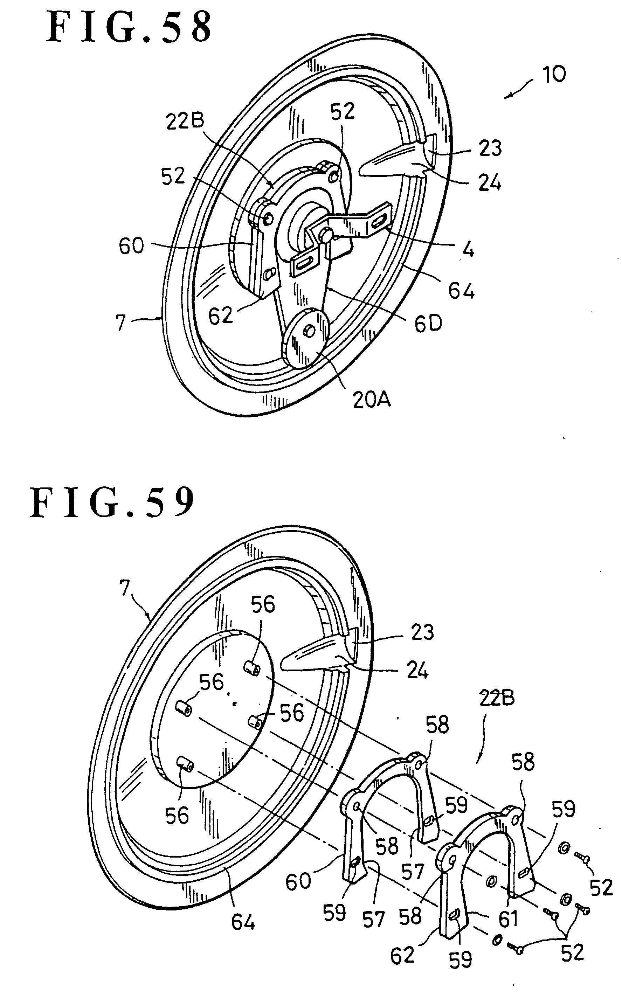

Figs. 58 to 63 illustrate a sixteenth embodiment of the present invention; this is distinguished from the fifteenth embodiment in that set parts 54,54 projecting in the shape of a chevron to the outside and to both sides near to a bearing part 53, and a wheel cover 10 comprises a movable side fixture 6D including a bevel 55 to provide easy removal; at the top thereof, a fitting part 22B which comprises a first fitting member 60 and a second fitting member 62, a weight 20A pivotably mounted to the bottom of the movable side fixture 6D through a bearing 63, and a guard 64. The first fitting member 60 is fixed with fanning out of the edge of its opening on the inner wall of the wheel cover body 7 with a plurality of screws 52 (four in this case) screwed into the corresponding number of nuts fixed to the wheel cover body 7, formed set parts 57, 57 which are able to set with set parts 54, 54 of the movable side fixture 6D in the inner side part of the opening thereof, having nut insertion holes 58, 58 and elongated nut insertion holes 59, 59. The second fitting member 62 is positioned at an upper part of the first fitting member 60 and formed set parts 61, 61 set with the outer of the bearing part 53 of the movable side fixture 6D having nut insertion holes 58, 58 and elongated nut insertion holes 59, 59, and used both as fitting members and a cover which can cover the circumference of the bearing part 53 of the movable side fixture 6D. The guard 64 in the shape of a ring, projects from the rear of the wheel cover body 7, near its perimeter, and can prevent the weight 20A fouling should the wheel cover body 7 rotate, and can pass through the bevel 55 of the movable side fixture 6D when the wheel cover body 7 moves, thus moving the weight 20 to the upper part thereof. In this case of the wheel cover 10 according to the sixteenth embodiment, rotation of the wheel cover body 7 is restricted by contact between the wheel cover body 7 and the guard 64 and weight 20A. Moreover, rotation of the wheel cover body 7 can be prevented with the effect to come to the end of rotating or pivoting due to the weight 20A pivotably mounted to the end of the movable side fixture 6D.

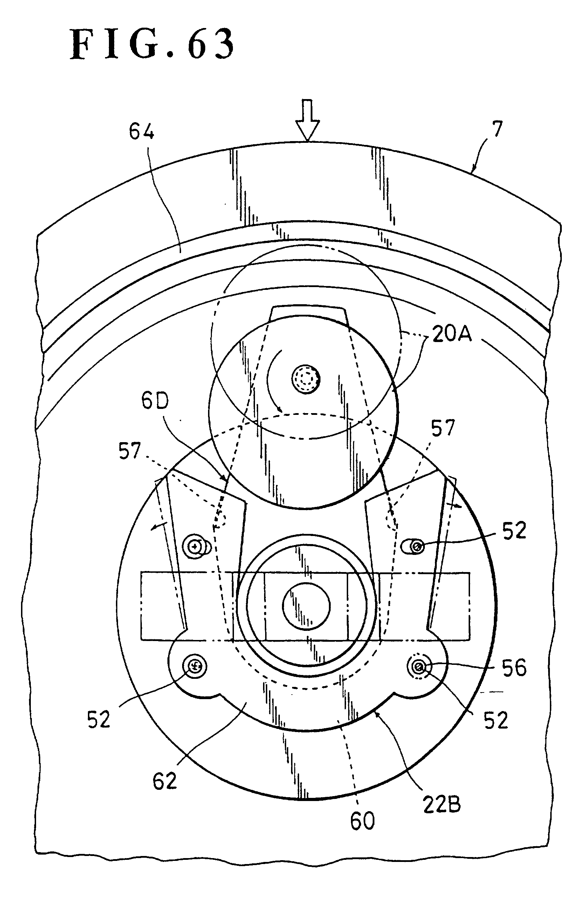

Additionally, the wheel cover body 7 can remove to slide the inclination for removing 55 with the end of the movable side fixture 6D on the holding means 64 because the weight pivots to the downward, removing to slide the wheel cover body 7 to the upward due to be positioned the end of the movable side fixture 6D to the upper part as illustrate Fig. 63.

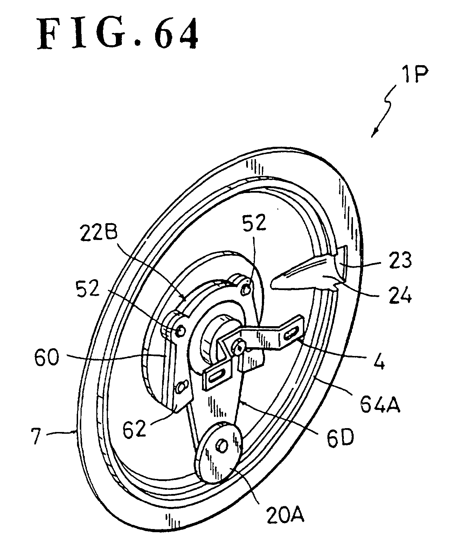

Figs. 64 to 66 illustrate a seventeenth embodiment of the present invention; this is distinguished from the sixteenth embodiment in that the guard 64A is moulded, so as to project from the rear of the wheel cover body 7, near its perimeter. A wheel cover 1P with the wheel cover body 7 according to the seventeenth embodiment will have similar advantages to that according to the sixteenth embodiment.

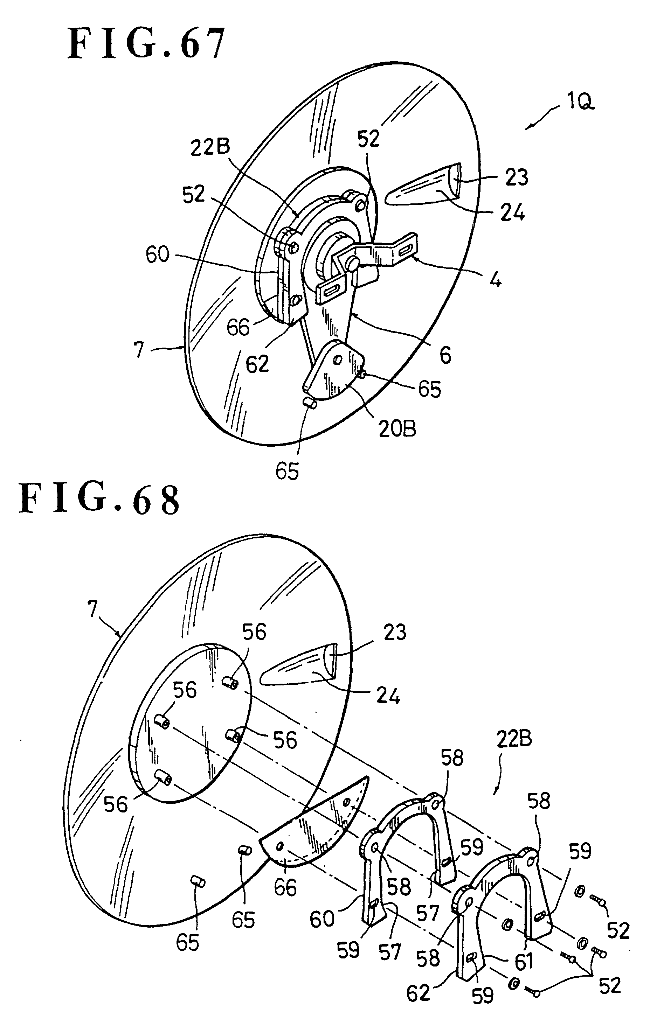

Figs. 67 to 71 illustrate an eighteenth embodiment of the present invention. It is distinguished from the sixteenth embodiment in that a fan-shaped weight 20B is pivotably mounted to the end of the movable side fixture 6, in that a guard 65, 65, located on the inner wall of the wheel cover body 7, can prevent the weight 20B fouling when the wheel cover body 7 moves during use, and a fitting part 22B used to a guide piece 66 in the shape of tapering, can insert easily to the movable side fixture 6, having higher opening part side and lower inner part side. A wheel cover 1Q according to the eighteenth embodiment will have similar advantages to that according to the sixteenth embodiment.

Moreover, in each of the above described embodiments, the use of a ball race as a bearing is explained, however, the present invention may use bearings which can rotatably support other bearings or axles.

Additionally, in each of the embodiments, an opposition board with flexibility to prevent the wheel cover body pivoting when the vehicle is stationary, may be mounted on the wheel cover body, movable side fixture, fixable side fixture and/or the other part, so as to touch one part of the wheel. In this case, pivoting of the wheel cover body when the vehicle starts can be easily prevented, as the opposition board is mounted close to the centre of the axle rather than distant from the centre of the axle.

Also, in each of the embodiments, a dynamo may be installed on the revolving part between the fixable side fixture and movable side fixture and fixable side fixture, to utilise the revolution.

## Claims

1. A wheel cover (1) for a vehicle wheel, comprising:
a wheel cover body (7), means for rotatably mounting said cover body (7) on a wheel (3), and
means for biasing the cover body (7) to a determined angular position regardless of the angular position of the wheel (3) about its axis,
**characterised in that** the means for biasing comprises an air current guide part (24), which is influenced by the airflow over the wheel cover (7) when the wheel (1) is in motion to bias the cover body (7) to the determined angular position.

2. A wheel cover (1) according to Claim 1, wherein the means for biasing further comprises an eccentric weight (20).

3. A wheel cover (1) according to Claim 2, comprising:
a fixable side part (4) for fixing to the centre of the wheel (3), to position the cover at the centre thereof, and
a movable side part (6) rotatably mounted on the central part of the fixable side part (4) through a bearing (5).

4. A wheel cover (1) according to Claim 3 wherein the eccentric weight (20) is mounted on said movable side part, in order to bias the movable side part (6) against rotation when the wheel (3) on which it is mounted rotates.

5. A wheel cover (1) according to Claim 3 or 4 wherein the wheel cover body (7) is substantially in the shape of a disc and mounted on the movable side part (6), and arranged to have a space between itself and the wheel (3).

6. A wheel cover (1) according to any of Claims 3 to 5, wherein the weight (20) is pivotably coupled to the movable side part (6) through a second bearing (63).

7. A wheel cover (1) according to Claim 6, wherein the weight (20) pivots downwards on the second bearing (63) when the wheel cover body (7) rotates to bring the weight (20) to the upper position on the first bearing (5).

8. A wheel cover (1) according to any of claims 3 to 6, wherein the movable side part (6) has a fitting part (22) which narrows upwardly for easy removal of the wheel cover body, and the wheel cover body (7) has a fitting piece (12) on an inside wall thereof, for engaging the fitting part (22) and securing the wheel cover body (7) to the movable side part (6).

9. A wheel cover (1) according to any of Claims 2 to 7, further comprising: a guard (64), in the shape of a ring, moulded so as to project from the rear of the wheel cover body (7), and which can prevent the weight (20) fouling should the wheel cover body (7) rotate.

10. A wheel cover (1) according to Claim 9, wherein the weight (20) is arranged to abut the guard (64) when the weight (20) is in the lower position on the bearing (5).

11. A wheel cover (1) according to Claim 9, arranged so that when the wheel cover body (7) is rotated to bring the weight (20) to the upper position, the weight (20) moves so as not to abut the guard (64), allowing the wheel cover body (7) to be slid downwards to remove the wheel cover body (7) from the wheel (3).

12. A wheel cover (1) according to Claims 6, 7 or 8, wherein the wheel cover body (7) is removed when the weight (20) moves to the upper part thereof.

13. A wheel cover (1) according to any of Claims 3, 4, and 5, wherein the movable side part (6) and weight (20) are integral.

14. A wheel cover (1) according to Claim 2 or 3, wherein the weight (20) is mounted on a lower part of the wheel cover body (7).

15. A wheel cover (1) according to any preceding claim, wherein the air current guide part (24) is arranged to be located to the rear of the axis of rotation of said cover body (7) when a vehicle, to which the wheel cover (1) is attached, is moving.

16. A wheel cover (1) according to any preceding claim, wherein the air current guide part (24) comprises an outlet (23).

17. A wheel cover (1) according to any preceding claim, wherein the air current guide part (24) is in the shape of a nose.

18. A wheel cover (1) according to any of Claims 1 to 15, wherein the air current guide part (24) defines a generally triangular shape where it joins the wheel cover body (7), the apex of the triangle arranged to point generally towards the front of the wheel cover body (7) when a vehicle, to which the wheel cover is attached, is moving.

19. A wheel (3), comprising a wheel cover (1) according to any preceding claim.

20. A vehicle, comprising a wheel cover (1) according to any preceding claim.

## Patentansprüche

1. Radkappe (1) für ein Fahrzeugrad, die aufweist:
einen Radkappenkörper (7);
eine Einrichtung für das drehbare Montieren des Kappenkörpers (7) an einem Rad (3); und
eine Einrichtung für das Vorspannen des Kappenkörpers (7) in eine bestimmte Winkelposition ungeachtet der Winkelposition des Rades (3) um seine Achse,
**dadurch gekennzeichnet, daß** die Einrichtung für das Vorspannen ein Luftstromführungsteil (24) aufweist, das durch den Luftstrom über der Radkappe (7) beeinflußt wird, wenn sich das Rad (1) in Bewegung befindet, um den Kappenkörper (7) in die bestimmte Winkelposition vorzuspannen.

2. Radkappe (1) nach Anspruch 1, bei der die Einrichtung für das Vorspannen außerdem ein exzentrisches Gewicht (20) aufweist.

3. Radkappe (1) nach Anspruch 2, die aufweist:
ein fixierbares Seitenteil (4) für das Befestigen an der Mitte des Rades (3), um die Kappe in dessen Mitte zu positionieren; und
ein bewegliches Seitenteil (6), das drehbar am mittleren Teil des fixierbaren Seitenteils (4) mittels eines Lagers (5) monitiert ist.

4. Radkappe (1) nach Anspruch 3, bei der das exzentrische Gewicht (20) am beweglichen Seitenteil montiert ist, um das bewegliche Seitenteil (6) gegen die Drehung vorzuspannen, wenn sich das Rad (3) dreht, an dem es montiert ist.

5. Radkappe (1) nach Anspruch 3 oder 4, bei der der Radkappenkörper (7) im wesentlichen in der Form einer Scheibe vorliegt und am beweglichen Seitenteil (6) montiert und so angeordnet ist, daß ein Zwischenraum zwischen ihm und dem Rad (3) vorhanden ist.

6. Radkappe (1) nach einem der Ansprüche 3 bis 5, bei der das Gewicht (20) mit dem beweglichen Seitenteil (6) mittels eines zweiten Lagers (63) drehbar gekoppelt ist.

7. Radkappe (1) nach Anspruch 6, bei der sich das Gewicht (20) auf dem zweiten Lager (63) nach unten dreht, wenn sich der Radkappenkörper (7) dreht, um das Gewicht (20) in die obere Position auf dem ersten Lager (5) zu bringen.

8. Radkappe (1) nach einem der Ansprüche 3 bis 6, bei der das bewegliche Seitenteil (6) ein Paßteil (22) aufweist, das sich nach oben für ein leichtes Abnehmen des Radkappenkörpers verengt, und der Radkappenkörper (7) weist ein Paßstück (12) auf einer Innenwand davon auf, um mit dem Paßteil (22) in Eingriff zu kommen und den Radkappenkörper (7) am beweglichen Seitenteil (6) zu sichern.

9. Radkappe (1) nach einem der Ansprüche 2 bis 7, die außerdem einen Schutz (64) in der Form eines Ringes aufweist, der so geformt ist, daß er aus der Rückseite des Radkappenkörpers (7) vorsteht, und der das Verschmutzen des Gewichtes (20) verhindern kann, sollte sich der Radkappenkörper (7) drehen.

10. Radkappe (1) nach Anspruch 9, bei der das Gewicht (20) so angeordnet ist, daß es an den Schutz (64) anstößt, wenn sich das Gewicht (20) in der unteren Position auf dem Lager (5) befindet.

11. Radkappe (1) nach Anspruch 9, so angeordnet, daß sich, wenn der Radkappenkörper (7) gedreht wird, um das Gewicht (20) in die obere Position zu bringen, das Gewicht (20) bewegt, damit es nicht an den Schutz (64) anstößt, wodurch gestattet wird, daß der Radkappenkörper (7) nach unten verschoben wird, um den Radkappenkörper (7) vom Rad (3) abzunehmen.

12. Radkappe (1) nach Anspruch 6, 7 oder 8, bei der der Radkappenkörper (7) entfernt wird, wenn sich das Gewicht (20) in dessen oberen Teil bewegt.

13. Radkappe (1) nach einem der Ansprüche 3, 4 und 5, bei der das bewegliche Seitenteil (6) und das Gewicht (20) zusammenhängend sind.

14. Radkappe (1) nach Anspruch 2 oder 3, bei der das Gewicht (20) an einem unteren Teil des Radkappenkörpers (7) montiert ist.

15. Radkappe (1) nach vorhergehenden Ansprüchen, bei der das Luftstromführungsteil (24) so angeordnet ist, daß es sich auf der Rückseite der Drehungsachse des Kappenkörpers (7) befindet, wenn sich ein Fahrzeug bewegt, an dem die Radkappe (1) befestigt ist.

16. Radkappe (1) nach vorhergehenden Ansprüchen, bei der das Luftstromführungsteil (24) eine Austrittsöffnung (23) aufweist.

17. Radkappe (1) nach vorhergehenden Ansprüchen, bei der das Luftstromführungsteil (24) in der Form einer Nase vorliegt.

18. Radkappe (1) nach einem der Ansprüche 1 bis 15, bei der das Luftstromführungsteil (24) eine im allgemeinen dreieckige Form definiert, wo es sich mit dem Radkappenkörper (7) verbindet, wobei die Spitze des Dreieckes so angeordnet ist, daß sie im allgemeinen in Richtung der Vorderseite des Radkappenkörpers (7) zeigt, wenn sich ein Fahrzeug bewegt, an dem die Radkappe befestigt ist.

19. Rad (3), das eine Radkappe (1) nach vorhergehenden Ansprüchen aufweist.

20. Fahrzeug, das eine Radkappe (1) nach vorhergehenden Ansprüchen aufweist.

## Revendications

1. Enjoliveur de roue (1) pour une roue de véhicule, comprenant:
un corps d'enjoliveur de roue (7),
un moyen pour monter par rotation ledit corps d'enjoliveur de roue (7) sur une roue (3), et
un moyen pour pousser le corps d'enjoliveur de roue (7) vers une position angulaire déterminée indépendamment de la position angulaire de la roue (3) autour de soin axe,
**caractérisé en ce que** le moyen de poussée comprend un élément de guidage du courant d'air (24) influencé par l'écoulement d'air au-dessus de l'enjoliveur de roue (7) lorsque la roue (1) se déplace, pour pousser le corps de l'enjoliveur de roue (7) vers la position angulaire déterminée.

2. Enjoliveur de roue (1) selon la revendication 1, dans lequel le moyen de poussée comprend en outre un poids excentrique (20).

3. Enjoliveur de roue (1) selon la revendication 2, comprenant:
un élément latéral pouvant être fixé (4) destiné à être fixé sur le centre de la roue (3) pour positionner l'enjoliveur de roue au niveau du centre correspondant, et
un élément latéral mobile (6) monté par rotation sur la partie centrale de l'élément latéral pouvant être fixé (4) par un palier (5).

4. Enjoliveur de roue (1) selon la revendication 3, dans lequel le poids excentrique (20) est monté sur ledit élément latéral mobile en vue de pousser l'élément latéral mobile (6) contre la rotation lors de la rotation de la roue (3) sur laquelle il est monté;

5. Enjoliveur de roue (1) selon les revendications 3 ou 4, dans lequel le corps de l'enjoliveur de roue (7) a pratiquement la forme d'un disque et est monté sur l'élément latéral mobile (6) et est agencé de sorte à établir un espace par rapport à la roue (3).

6. Enjoliveur de roue (1) selon l'une quelconque des revendications 3 à 5, dans lequel le poids (20) et accouplé par pivotement sur l'élément latéral mobile (6) par un deuxième palier (63).

7. Enjoliveur de roue (1) selon la revendication 6, dans lequel le poids (20) pivote vers le bas sur le deuxième palier (63) lorsque le corps de l'enjoliveur de roue (7) tourne pour déplacer le poids (20) vers la position supérieure sur le premier palier (5).

8. Enjoliveur de roue (1) selon l'une quelconque des revendications 3 à 6, dans lequel l'élément latéral mobile (6) comporte un élément d'ajustement (22) rétréci vers le haut en vue d'un retrait facile du corps de l'enjoliveur de roue, le corps de l'enjoliveur de roue (7) comportant une pièce d'ajustement (12) sur une paroi interné correspondante destinée à s'engager dans l'élément d'ajustement (22) et à fixer le corps de l'enjoliveur de roue (7) sur l'élément latéral mobile (6).

9. Enjoliveur de roue (1) selon l'une quelconque des revendications 2 à 7, comprenant en outre: un élément de protection (64) sous forme d'une bague, moulé de sorte à déborder de l'arrière du corps de l'enjoliveur de roue (7), pouvant empêcher un accrochage du poids (20) lors d'une rotation du corps de l'enjoliveur de roue (7).

10. Enjoliveur de roue (1) selon la revendication 9, dans lequel le poids (20) est agencé de sorte à buter contre l'élément de protection (64) lorsque le poids (20) est agencé dans la position inférieure sur le palier (5).

11. Enjoliveur de roue (1) selon la revendication 9, agencé de sorte que lors de la rotation du corps de l'enjoliveur de roue (7) pour déplacer le poids (20) vers la position supérieure, le poids (20) se déplace de sorte à ne pas buter contre l'élément de protection (64), permettant le glissement du corps de l'enjoliveur de roue (7) vers le bas pour retirer le corps de l'enjoliveur de roue (7) de la roue (3).

12. Enjoliveur de roue (1) selon les revendications 6, 7 ou 8, dans lequel le corps de l'enjoliveur de roue (7) est retiré lorsque le poids (20) se déplace vers la partie supérieure correspondante.

13. Enjoliveur de roue (1) selon les revendications 3, 4 et 5, dans lequel l'élément latéral mobile (6) et le poids (20) sont constitués d'une seule pièce.

14. Enjoliveur de roue (1) selon les revendications 2 ou 3, dans lequel le poids (20) est monté sur une partie inférieure du corps de l'enjoliveur de roue (7).

15. Enjoliveur de roue (1) selon l'une quelconque des revendications précédentes, dans lequel l'élément de guidage du courant d'air (24) est agencé sur l'arrière de l'axe de rotation dudit corps de l'enjoliveur de roue (7) lors du déplacement d'un véhicule sur lequel est fixé l'enjoliveur de roue (1).

16. Enjoliveur de roue (1) selon l'une quelconque des revendications précédentes, dans lequel l'élément de guidage du courant d'air (24) comprend un orifice de sortie (23).

17. Enjoliveur de roue (1) selon l'une quelconque des revendications précédentes, dans lequel l'élément de guidage du courant d'air (24) a la forme d'un nez.

18. Enjoliveur de roue (1) selon l'une quelconque des revendications 1 à 15, dans lequel l'élément de guidage du courant d'air (24) définit une forme généralement triangulaire au niveau du point où il est relié au corps de l'enjoliveur de roue (7), le sommet du triangle étant agencé de sorte à être orienté en général vers l'avant du corps de l'enjoliveur de roue (7) lors du déplacement d'un véhicule sur lequel l'enjoliveur de roue est fixé.

19. Roue (3) comprenant un enjoliveur de roue (1) selon l'une quelconque des revendications précédentes.

20. Véhicule, comprenant un enjoliveur de roue (1) selon l'une quelconque des revendications précédentes.
